(19) Europäisches Patentamt / European Patent Office / Office européen des brevets

(11) **EP 2 963 801 B1**

(12) **EUROPEAN PATENT SPECIFICATION**

(45) Date of publication and mention
of the grant of the patent:
**22.01.2020 Bulletin 2020/04**

(21) Application number: **14756901.6**

(22) Date of filing: **26.02.2014**

(51) Int Cl.:
*H02P 1/30* (2006.01)　　*H02M 7/49* (2007.01)
*H02P 21/00* (2016.01)　　*H02P 27/04* (2016.01)
*H02P 6/21* (2016.01)

(86) International application number:
**PCT/JP2014/054729**

(87) International publication number:
**WO 2014/133026 (04.09.2014 Gazette 2014/36)**

(54) **SPEED-SENSORLESS MOTOR CONTROL DEVICE AND METHOD FOR STARTING SPEED-SENSORLESS MOTOR**

STEUERUNGSVORRICHTUNG FÜR EINEN MOTOR OHNE GESCHWINDIGKEITSSENSOR UND VERFAHREN ZUM STARTEN DES MOTORS OHNE GESCHWINDIGKEITSSENSOR

DISPOSITIF DE COMMANDE DE MOTEUR SANS CAPTEUR DE VITESSE ET PROCÉDÉ POUR DÉMARRER UN MOTEUR SANS CAPTEUR DE VITESSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.03.2013 JP 2013041230**

(43) Date of publication of application:
**06.01.2016 Bulletin 2016/01**

(73) Proprietors:
• **Tokyo Institute of Technology**
**Tokyo 152-8550 (JP)**
• **Toshiba Mitsubishi-Electric**
**Industrial Systems Corporation**
**Tokyo**
**1040031 (JP)**

(72) Inventors:
• **AKAGI, Hirofumi**
**Tokyo 152-8550 (JP)**
• **HAGIWARA, Makoto**
**Tokyo 152-8550 (JP)**

(74) Representative: **Krauns, Christian**
**Wallinger Ricker Schlotter Tostmann**
**Patent- und Rechtsanwälte Partnerschaft mbB**
**Zweibrückenstraße 5-7**
**80331 München (DE)**

(56) References cited:
**EP-A1- 2 485 384**　　**EP-A2- 1 494 345**
**WO-A1-2011/040057**　　**JP-A- H02 186 588**
**JP-A- 2011 182 517**　　**JP-A- 2012 023 814**
**JP-A- 2012 044 839**　　**JP-A- 2012 139 015**
**US-A- 4 999 560**

**Description**

Technical Field

The present invention relates to a speed sensorless motor control apparatus that uses an inverter for driving a motor, and a speed sensorless motor starting method.

Background Art

By introducing a high-pressure alternating-current (AC) motor variable speed driving technology that uses an inverter for controlling an air volume or a water volume of a large-capacity fan, blower, compressor or the like, energy saving much greater than that in the case of conventional damper control can be achieved.

As a method for achieving a large capacity or high pressure inverter that can deal with a load of the above-mentioned large type device, there is a multiplexing system using a transformer for a converter. On the other hand, in recent years, there has been proposed a transformerless motor driving system that uses a diode clamp multilevel converter capable of achieving high pressure resistance (e.g., see Non-patent Literature 1).

In addition, there has been proposed a modular multilevel cascade inverter (MMCI) of a double star chopper cell (DSCC) (hereinafter, may be simply referred to as "modular multilevel inverter") easily mounted and suited for achieving a large capacity or high pressure (e.g., see Patent Literature 1 and Non-patent Literature 2).

The European patent application EP 2 485 384 A1 discloses a motor starting method for starting a motor by using an inverter. The method includes a first step of controlling the inverter to make a capacitor voltage instruction value which increases from a first voltage value larger than a voltage value by which the inverter operates as a PWM converter to a second voltage value by which the inverter can output an initial voltage to be applied to the motor follow an average value of voltages of all of the DC capacitors; and a second control step of controlling a voltage of each of the DC capacitors follow the capacitor voltage instruction value which increases from the second voltage value to a rated voltage value of the DC capacitor for a predetermined period after the first control step so as to follow the voltage of each of the DC capacitors, and controlling to output a voltage having a predetermined frequency lower than a power source frequency which increases from the initial voltage value to the rated voltage value of the motor from a terminal of a 3-terminal coupled reactor.

The present invention is defined in claims 1 and 3.

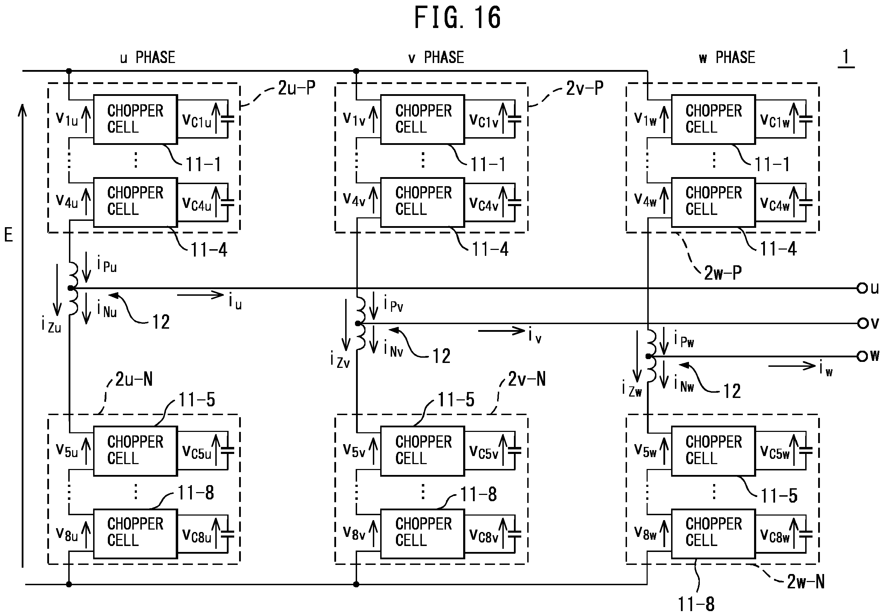

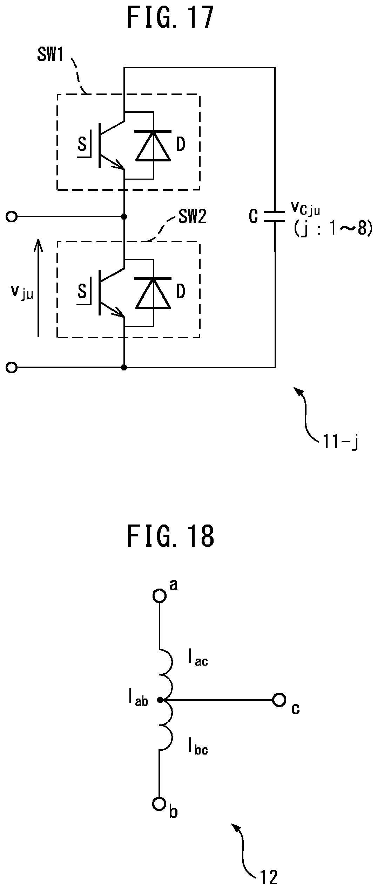

FIG. 16 is a circuit diagram illustrating a main circuit configuration of the modular multilevel inverter. FIG. 17 is a circuit diagram illustrating chopper cells that are components of the modular multilevel inverter. FIG. 18 is a circuit diagram illustrating a three-terminal coupled reactor that is a component of the modular multilevel inverter. Throughout the drawings, components having the same reference signs have the same functions. Throughout the phases, a circuit configuration, an operation principle, and a control method are similar. Thus, hereinafter, a u phase will be mainly described.

The modular multilevel inverter 1 (hereinafter, may be simply referred to as "inverter 1") illustrated in FIG. 16 is a voltage full bridge inverter having u, v, and w phases. A large-capacity smoothing capacitor (not illustrated) is connected to a direct-current (DC) side (DC link) of the inverter 1, and a DC voltage E is applied. The DC voltage E may not necessarily be a fixed value. For example, the DC voltage E may include a low-order harmonic component or a switching ripple component generated due to a diode rectifier. Accordingly, the smoothing capacitor can be omitted.

Each of the u, v, and w phases of the inverter 1 illustrated in FIG. 16 includes chopper cells 11-j (j = 1 to 8, the same applies hereinafter) illustrated in FIG. 17 and the three-terminal coupled reactor 12 illustrated in FIG. 18. With regard to the chopper cells 11-j illustrated in FIG. 16, for easier understanding, a DC capacitor C in the chopper cells 11-j illustrated in FIG. 17 is depicted outside the chopper cells 11-j.

In the example illustrated in FIG. 16, as an example, the number of chopper cells at each phase is eight. Accordingly, an output from the inverter 1 has a pulse width modulation (PWM) waveform with 9 levels of phase voltages and 17 levels of line voltages.

As illustrated in FIG. 17, each of the chopper cells 11-j is a two-terminal circuit that includes two semiconductor switches SW 1 and SW 2, and the DC capacitor C, and may be regarded as a part of a bidirectional chopper. Each of the chopper cells 11-j is configured by connecting the two semiconductor switches SW 1 and SW 2 in series, and connecting the DC capacitor C to the semiconductor switches in parallel. Of the two semiconductor switches SW 1 and SW 2, in the illustrated example, terminals of the semiconductor switch SW 2 are output terminals of the chopper cell 11. Herein, a voltage value of the DC capacitor is represented by $V_{Cju}$ (j = 1 to 8), and a value of output voltage (voltage between both ends of semiconductor switch SW 2) of the chopper cells 11-j are represented by $V_{ju}$ in the case of the u phase.

As described above, the inverter 1 is the voltage inverter. Accordingly, each of the semiconductor switches SW 1 and SW 2 includes a semiconductor switching element S for supplying a current in one direction when turned ON, and

a feedback diode D connected to the semiconductor switching element in antiparallel. The semiconductor switching element S is, for example, an insulated gate bipolar transistor (IGBT).

Among the eight chopper cells 11-1 to 11-8 at the u phase, the chopper cells 11-1 to 11-4 are cascade-connected via respective output terminals thereof. Herein, this is referred to as a first arm 2u-P. The chopper cells 11-5 to 11-8 are cascade-connected via respective output terminals thereof. Herein, this is referred to as a second arm 2u-N. The same applies to the v and w phases, and a first arm 2v-P and a second arm 2v-N, and a first arm 2w-P and a second arm 2w-N are respectively provided. Herein, for the u phase, a current flowing through the first arm is represented by $i_{Pu}$, and a current flowing through the second arm is represented by $i_{Nu}$. For the v phase, a current flowing through the first arm is represented by $i_{Pv}$, and a current flowing through the second arm is represented by $i_{Nv}$. For the w phase, a current flowing through the first arm is represented by $i_{Pw}$, and a current flowing through the second arm is represented by $i_{Nw}$. Hereinafter, such a current will be referred to as an "arm current".

The three-terminal coupled reactor 12 (hereinafter, simply referred to as "coupled reactor 12") includes a first terminal a, a second terminal b, and a third terminal c located on a winding wire between the first terminal a and the second terminal b. As to the u phase, the first arm 2u-P is connected to the first terminal a of the coupled reactor 12, and the second arm 2u-N is connected to the second terminal b of the coupled reactor 12. The third terminal c of the coupled reactor 12 serves as an output terminal of the u phase of the inverter 1. Similarly, as to the v phase, the first arm 2v-P is connected to the first terminal a of the coupled reactor 12, and the second arm 2v-N is connected to the second terminal b of the coupled reactor 12. The third terminal c of the coupled reactor 12 serves as an output terminal of the v phase of the inverter 1. As to the w phase, the first arm 2w-P is connected to the first terminal a of the coupled reactor 12, and the second arm 2w-N is connected to the second terminal b of the coupled reactor 12. The third terminal c of the coupled reactor 12 serves as an output terminal of the w phase of the inverter 1. In other words, the third terminals c of the coupled reactors 12 at the phases u, v, and w serves as output terminals of the phases, u, v, and w of the inverter 1, respectively.

At the u phase, a large-capacity smoothing capacitor (not illustrated) is connected to each of the terminals of the sides of the first arm 2u-P and the second arm 2uN to which the coupled reactor 12 is not connected, and a power supply voltage E of a DC side is applied thereto. Similarly, at the v phase, the power supply voltage E of the DC side is applied to each of the terminals of the sides of the first arm 2v-P and the second arm 2v-N to which the coupled reactor 12 is not connected. At the w phase, the power supply voltage E of the DC side is applied to each of the terminals of the sides of the first arm 2w-P and the second arm 2w-N to which the coupled reactor 12 is not connected.

Herein, currents flowing from the output terminals of the u, v and w phases of the inverter 1 (i.e., currents flowing into motor when, for example, motor is connected as load of inverter 1) are respectively represented by $i_u$, $i_v$, and $i_w$, and will be referred to as "load side currents" hereinafter.

In this case, for the u phase, the following circuit equation (1) is established, where l denotes inductance of the reactor 12.

$$E = \sum_{j=1}^{8} v_{ju} + l\frac{d}{dt}\left(i_{Pu} + i_{Nu}\right) \qquad \cdots (1)$$

From the equation (1), it can be understood that there is a closed circuit not passing through any load. Herein, this closed circuit is referred to as a "DC loop". The following relationship is established between the arm currents $i_{Pu}$ and $i_{Nu}$ and the load side current $i_u$, where $i_{Zu}$ denotes a current circulating through the DC loop of the u phase (hereinafter, referred to as "circulating current".

$$i_{Pu} = \frac{i_u}{2} + i_{Zu} \qquad \cdots (2)$$

$$i_{Nu} = -\frac{i_u}{2} + i_{Zu} \qquad \cdots (3)$$

$$i_{Zu} = \frac{1}{2}\left(i_{Pu} + i_{Nu}\right) \qquad \cdots \ (4)$$

Next, an operation principle and a control method of the inverter 1 illustrated in FIGS. 16 to 18 will be described mainly for the u phase.

Control of a voltage $V_{Cju}$ of the DC capacitor in each of the chopper cells 11-j in the inverter 1 that is the modular multilevel inverter includes two control processes.

One is control executed at each phase independently of the other phases to cause a value $V_{Cuave}$ obtained by averaging voltages of all the DC capacitors in the chopper cells 11-j to follow a desired DC capacitor voltage command value $V_C{}^*$. Herein, this control is referred to as "averaging control".

Another is control for causing the voltage $V_{Cju}$ of the DC capacitor in each of the chopper cells 11-j to follow the desired DC capacitor voltage command value $V_C{}^*$. Herein, this control is referred to as "balancing control".

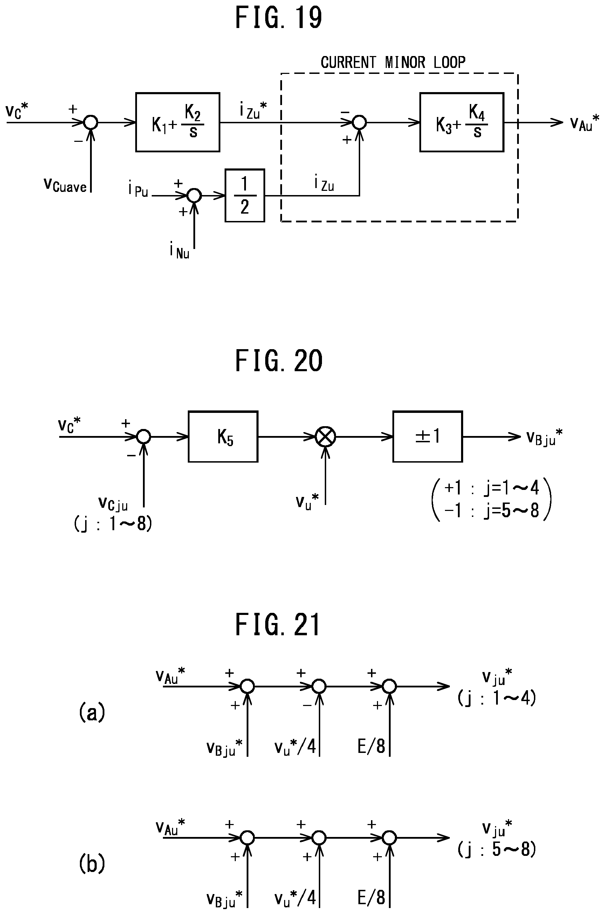

An operation principle of the averaging control is as described below. FIG. 19 is a block diagram illustrating the averaging control of the DC capacitor in the modular multilevel inverter. The value $V_{Cuave}$ obtained by averaging the voltages of all the DC capacitors at the u phase is represented by the following equation (5).

$$V_{Cuave} = \frac{1}{8}\sum_{j=1}^{8} V_{Cju} \qquad \cdots \ (5)$$

From FIG. 19, a current command value $i_{Zu}{}^*$ of the circulating current $i_{Zu}$ is represented by the following equation (6), wherein $K_1$ and $K_2$ denote gains.

$$i_{Zu}{}^* = K_1\left(v_C{}^* - v_{Cuave}\right) + K_2\int\left(v_C{}^* - v_{Cuave}\right)dt \qquad \cdots \ (6)$$

In this case, a voltage command value $V_{Au}{}^*$ of the averaging control is represented by the following equation (7), wherein $K_3$ and $K_4$ denote gains.

$$V_{Au}{}^* = K_3\left(i_{Zu} - i_{Zu}{}^*\right) + K_4\int\left(i_{Zu} - i_{Zu}{}^*\right)dt \qquad \cdots \ (7)$$

In the averaging control, a current minor loop for causing an actual current amount $i_{Zu}$ of the circulating current to follow the current command value $i_{Zu}{}^*$ is configured. The actual circulating current $i_{Zu}$ is calculated by the equation (4). By controlling this circulating current $i_{Zu}$ via the current minor loop, the averaging control can be achieved without affecting the load current $i_u$. In the equation (6), when the value $V_{Cuave}$ obtained by averaging the voltages of all the DC capacitors is smaller than the DC capacitor voltage command value $V_C{}^*$ ($V_{Cuave} < V_C{}^*$), the current command value $i_{Zu}{}^*$ increases. When the actual circulating current $i_{Zu}$ drops below the current command value $i_{Zu}{}^*$ ($i_{Zu} < i_{Zu}{}^*$), the output voltage $V_{ju}$ of each of the chopper cells 11-j is reduced with respect to the power supply voltage E of the DC side to increase the circulating current $i_{Zu}$. On the other hand, when the actual circulating current $i_{Zu}$ increases over the current command value $i_{Zu}{}^*$ ($i_{Zu} > i_{Zu}{}^*$), the output voltage $V_{ju}$ of each of the chopper cells 11-j is increased with respect to the power supply voltage E of the DC side to reduce the circulating current $i_{Zu}$.

An operation principle of the balancing control is as described below. FIG. 20 is a block diagram illustrating the balancing control of the DC capacitor in the modular multilevel inverter. As described above, the balancing control is control for causing the voltage $V_{Cju}$ of the DC capacitor in each of the chopper cells 11-j to follow the desired DC capacitor voltage command value $V_C{}^*$. $V_{Bju}{}^*$ denotes a voltage command value of the balancing control.

By forming effective power between the output voltage $V_{ju}$ in each of the chopper cells 11-j and the arm currents $i_{Pu}$ and $i_{Nu}$, the voltage $V_{Cju}$ of the DC capacitor is caused to follow the DC capacitor voltage command value $V_C{}^*$. For example, in the chopper cells 11-j (j = 1 to 4) in the first arm 2u-P illustrated in FIG. 16, when the voltages $V_{Cju}$ of the DC capacitors are smaller than the DC capacitor voltage command value $V{}^*_{Cu}$ ($V_{Cju} < V{}^*_{Cu}$), in order to increase the voltages $V_{Cju}$ of the DC capacitors, positive effective currents are supplied into the chopper cells 11-j. Accordingly, the voltage command value $V_{Bju}{}^*$ (j = 1 to 4) of the balancing control represented by the equation (8) is used, where $K_5$

denotes a gain.

$$V_{Bju}{}^* = K_5\left(v_C{}^* - v_{Cju}\right)v_u{}^*$$

$$(\text{where } j = 1 \text{ to } 4) \quad \ldots \ (8)$$

In the equation (8), $V_u{}^*$ denotes a command value of a voltage to be applied to a load. The command value $V_u{}^*$ is represented by the equation (9), where $V^*$ denotes an effective value of a line voltage command value and f denotes a frequency.

$$V_u{}^* = \sqrt{\frac{2}{3}}V^* \sin 2\pi f t \qquad \cdots \ (9)$$

In the case of a variable speed driving system of an induction motor, the command value $V_u{}^*$ and the load current $i_u$ are not in phase, but the load current $i_u$ is delayed from the command value $V_u{}^*$. However, an operation is stable. When the voltages $V_{Cju}$ of the DC capacitors are smaller than the DC capacitor voltage command value $V^*{}_C$ ($V_{Cju} < V^*{}_C$), the arm current $i_{Pu}$ and the voltage command value $V_{Bju}{}^*$ are in phase because of the equation (9). Accordingly, positive effective power "$V^*{}_{Bju} \times i_{Pu}$" is supplied into the chopper cells 11-j. On the other hand, when the voltages $V_{Cju}$ of the DC capacitors are larger than the DC capacitor voltage command value $V^*{}_C$ ($V_{Cju} > V^*{}_C$), the arm current $i_{Pu}$ and the voltage command value $V_{Bju}{}^*$ are in reverse phase because of the equation (9). Accordingly, negative effective power "$V^*{}_{Bju} \times i_{Pu}$" is supplied into the chopper cells 11-j.

Similarly, for the chopper cells 11-j (j = 5 to 8) of the second arm 2u-N illustrated in FIG. 16, the voltage command value $V_{Bju}{}^*$ (j = 5 to 8) of the balancing control represented by the equation (10) is used, where $K_5$ denotes a gain.

$$V_{Bju}{}^* = -K_5\left(v_C{}^* - v_{Cju}\right)v_u{}^*$$

$$(\text{where } j = 5 \text{ to } 10) \quad \ldots \ (10)$$

Thus, the voltages $V_{Cju}$ of the DC capacitors in the chopper cells 11-j in the inverter 1 that is the modular multilevel inverter are controlled by the above-mentioned averaging control and the above-mentioned balancing control.

Generation of an output voltage command value used for generating switching signals of the semiconductor switches SW 1 and SW 2 in each of the chopper cells 11-j will be described. FIGS. 21A and 21B are block diagrams illustrating generation of output voltage command values for the respective chopper cells in the modular multilevel inverter.

The output voltage command value $V_{ju}{}^*$ of each of the chopper cells 11-j is represented by the equation (11) in the case of the chopper cells 11-j (j = 1 to 4) in the first arm 2u-P, and by the equation (12) in the case of the chopper cells 11-j (j = 5 to 8) in the second arm 2uN. To generate the output voltage command value $V_{ju}{}^*$, the power supply voltage E of the DC side is used as a feedforward term.

$$V_{ju} = V_{Au}{}^* + V_{Bju}{}^* - \frac{V_u{}^*}{4} + \frac{E}{8}$$

$$(\text{where } j = 1 \text{ to } 4) \ \ldots \ (11)$$

$$V_{ju} = V_{Au}{}^* + V_{Bju}{}^* + \frac{V_u{}^*}{4} + \frac{E}{8}$$

$$(\text{where } j = 5 \text{ to } 8) \ \ldots \ (12)$$

The output voltage command value $V_{ju}{}^*$ generated in the above-mentioned manner is standardized by each DC capacitor voltage $V_{Cju}$, and then compared with a triangular wave carrier signal of a carrier frequency $f_c$ to generate a PWM switching signal. The generated switching signal is used for switching the semiconductor switches SW 1 and SW 2 in corresponding one of the chopper cells 11-j. A switching frequency $f_s$ of each of the chopper cells 11-j is equal to the carrier frequency $f_c$. For example, when the number of chopper cells is eight, each initial phase of carrier signals corresponding to the respective chopper cells 11-j is shifted by 45°. In other words, the initial values are respectively set to 0°, 90°, 180°, 270°, 45°, 135°, 225°, 315° for the chopper cells 11-1 to 11-8. Each initial phase of carrier signals of respective phases is shifted by 120°. Accordingly, a line voltage of the output voltage of the inverter 1 has an AC waveform of 17 levels, and an equivalent switching frequency is $8f_c$.

The generation of the switching signals for the switches SW 1 and SW 2 in the above-mentioned chopper cell is achieved by using an arithmetic processing unit such as a digital signal processor (DSP) or a field programmable gate array (FPGA).

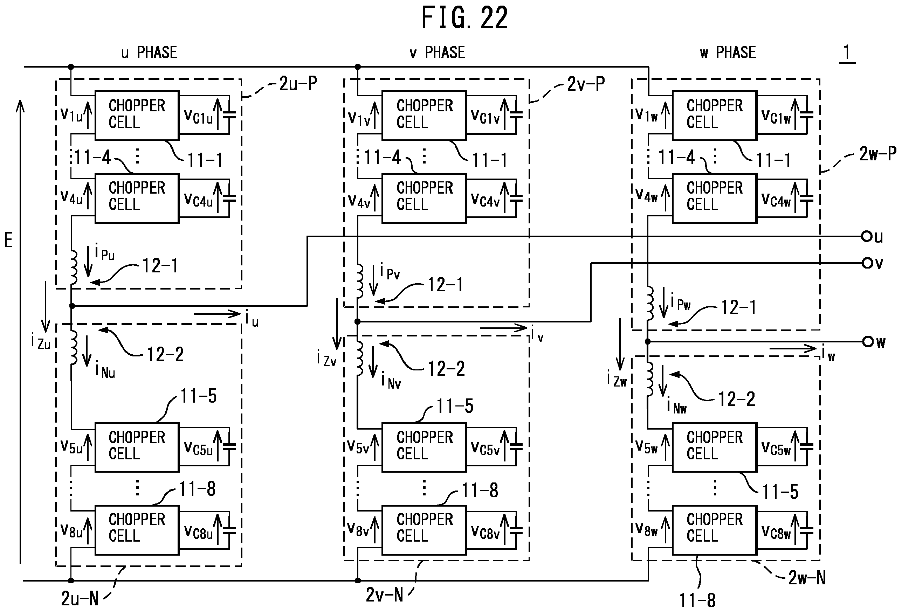

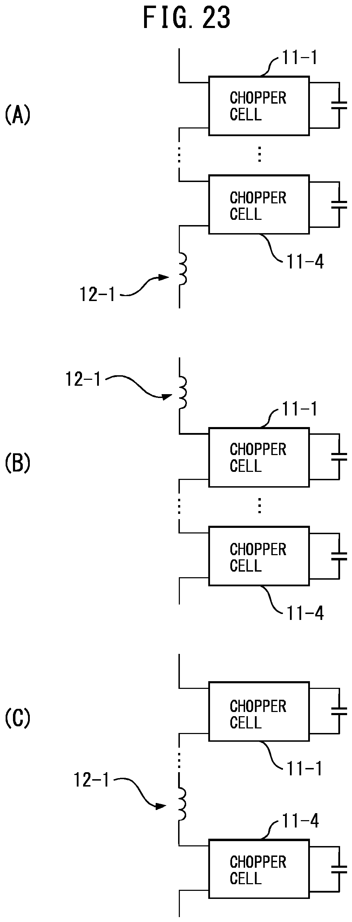

As a modified example of the modular multilevel inverter 1 illustrated in FIG. 16, there is an inverter that uses a normal reactor (i.e., uncoupled reactor) in place of the three-terminal coupled reactor. FIG. 22 is a circuit diagram illustrating a main circuit configuration according to another example of the modular multilevel inverter. FIGS. 23A to 23C are circuit diagrams each illustrating a reactor arrangement example in the modular multilevel inverter illustrated in FIG. 22. In this example, a first arm 2u-P includes chopper cells 11-j (j = 1 to 4) and a reactor 12-1, and a second arm 2u-N includes chopper cells 11-j (j = 5 to 8) and a reactor 12-2. In the first arm 2u-P, four chopper cells 11-j (j = 1 to 4) are cascade-connected via output terminals of the chopper cells, and the reactor 12-1 is connected to an arbitrary position among the cascade-connected chopper cells. In the second arm 2u-N, four chopper cells 11-j (j = 5 to 8) are cascade-connected via output terminals of the chopper cells, and the reactor 12-2 is connected to an arbitrary position among the cascade-connected chopper cells. In the modular multilevel inverter 1 illustrated in FIG. 22, for the reactor 12-1, the chopper cell 11-4 is connected to one terminal, and the reactor 12-2 is connected to the other terminal. For the reactor 12-2, the reactor 12-1 is connected to one terminal, and the chopper cell 11-5 is connected to the other terminal. A DC power supply voltage is applied to each of the terminals of unconnected sides of the first arm 2u-P and the second arm 2u-N. The connected terminals of the first arm 2u-P and the second arm 2u-N serve as output terminals of the u phase of the inverter 1.

In the modular multilevel inverter 1 using the uncoupled reactor illustrated in FIG. 22, the reactors 12-1 and 12-2 are connected to the arbitrary positions among the cascade-connected chopper cells 11-j. FIG. 23A illustrates the first arm illustrated in FIG. 22. As another example of the reactor arranging position, for example, as illustrated in FIG. 23B, the reactor may be connected to a terminal of a side of the chopper cell 11-1 to which a DC power supply voltage is applied. As illustrated in FIG. 23C, the reactor may be connected between the chopper cells 11-3 and 11-4.

Other circuit components are similar to those illustrated in FIG. 16. Thus, the same circuit components are denoted by the same reference signs, and a detailed description of the circuit components thereof will be omitted.

Further, there has been proposed a method for controlling a modular multilevel inverter without using any common mode voltage (e.g., Non-patent Literature 4).

In the case of driving a motor (induction motor) by using a general-purpose inverter, on the other hand, variable voltage variable frequency speed control (hereinafter, referred to as "V/f control") is widely used (e.g., Non-patent Literature 3). The V/f control is characterized by its capability of achieving a constant torque operation for a period from a motor start to reaching of a rated frequency.

However, when driving of the modular multilevel inverter 1 illustrated in FIG. 16 is controlled by using the V/f control, as described in the Non-patent Literature 3, AC voltage fluctuation having a motor driving frequency as a main component is generated in the voltages of the DC capacitors in the chopper cells 11-j. AC fluctuation $V_{C1u}'$ included in the voltage $V_{C1u}$ of the DC capacitor of the chopper cell 11-1 illustrated in FIG. 16 can be approximated by the equations (13) and (14) as described in the Non-patent Literature 3.

$$V_{C1u}{}' = \frac{\Delta V_{C1u}}{2} \cos 2\pi f t \qquad \cdots \ (13)$$

$$\Delta V_{C1u} \fallingdotseq \frac{\sqrt{2}I}{4\pi f C} \qquad \cdots \ (14)$$

In the equations, $\Delta_{Vclu}$ denotes maximum voltage fluctuation of $V_{C1u}'$, I denotes an effective value of a current flowing into the motor (hereinafter, simply referred to as "motor current"), f denotes an output frequency of the modular multilevel inverter 1, and C denotes capacitance of the DC capacitor in the chopper cell 11-1.

By the equations (13) ad (14), the AC fluctuation $V_{Clu}$' is proportional to the effective value I of the motor current, and inversely proportional to the output frequency f. Accordingly, when the V/f control in which a start current approximately equal to a rated current is generated in a low frequency region is applied to motor diving carried out by using the modular multilevel inverter 1, AC voltage fluctuation larger by several times than that during a rated frequency operation may occur at the time of starting the motor.

Thus, in the motor driving using the modular multilevel inverter, at the time of starting the motor or during a slow speed operation, voltage fluctuation of the DC capacitor in each chopper cell in the modular multilevel inverter increases, creating a problem of an unstable operation.

In order to solve the problem, there has been proposed a technology for fixing an appropriate frequency to set a motor driving current at the time of starting (e.g., see Non-patent Literature 5).

Similarly, in order to solve the problem, there has been proposed a technology for starting the motor by vector control with a speed sensor (e.g., see Non-patent Literature 6). According to this technology, in order to suppress the voltage fluctuation of the DC capacitor in each chopper cell in the modular multilevel inverter at the time of starting the motor or during the slow speed operation, a common mode voltage of 40 to 50 Hz is superimposed on the circulating current, and starting of the motor from a zero speed is achieved by using the vector control with the speed sensor.

Citation List

Patent Literature 1: Japanese Laid-open Patent Publication No. 2011-078213
Non-patent Literature 1: pp. 259 to 266, "Induction Motor Variable Driving System by 5-Level Diode Clamp PWM Rectifier : Inverter" by Yosuke Kondo, Hatti Natchpong, and Yasuhumi Akagi, Journal D of Institute of Electrical Engineers of Japan, Vol. 128, No. 3, 2008
Non-patent Literature 2: pp. 544 to 551, "High-Pressure Motor Drive Using Modular Multilevel PWM Inverter, 1st Report : Experimental Verification by 400 V, 15 kW Mini-model" by Makoto Hagiwara, Kazutoshi Nishimura, and Yasuhumi Akagi, Journal D of Institute of Electrical Engineers of Japan, Vol. 130, No. 4, 2010
Non-patent Literature 3: pp. 19 to 24, "Application to High-Pressure Motor Driving System Using Modular Multilevel PWM Inverter - Experimental Verification by 400 V, 15 kW Mini-model -" by Kazutoshi Nishimura, Makoto Hagiwara, and Yasuhumi Akagi, Semiconductor Power Conversion Study Group of Institute of Electrical Engineers of Japan, SPC - 09 - 24, January, 2009
Non-patent Literature 4: pp. 1055 to 1064, "Decoupling Control of Three-phase Modular Multilevel Cascade Converter (MMCC-DSCC)" by Naoto Niimura and Yasuhumi Akagi, Journal D of Institute of Electrical Engineers of Japan, Vol. 1. 132, No. 11, 2012
Non-patent Literature 5: pp. 552 to 559, "High-Pressure Motor Drive Using Modular Multilevel PWM Inverter, 2nd Report : Starting Method and Starting Characteristics" by Kazutoshi Nishimura, Makoto Hagiwara, and Yasuhumi Akagi, Journal D of Institute of Electrical Engineers of Japan, Vol. 130, No. 4, 2010
Non-patent Literature 6: pp. 1072 to 1079, "Low-Speed Operation of Motor Drive Using Modular Multilevel Cascade Inverter (MMCI-DSCC)" by Makoto Hagiwara, Isamu Hasegawa, and Yasuhumi Akagi, Journal D of Institute of Electrical Engineers of Japan, Vol. 1. 132, No. 11, 2012

Summary of Invention

Technical Problem

The technologies described in the Non-patent Literature 5 and Non-patent Literature 6 are effective for suppressing the voltage fluctuation of the DC capacitor in each chopper cell in the modular multilevel inverter at the time of starting the motor or during the slow speed operation of the motor driven by using the modular multilevel inverter.

However, according to the technology described in the Non-patent Literature 5, rated or higher slipping occurs during the slow speed operation of the motor. Consequently, an excess current is generated, and a reduction of motor torque is a problem.

According to the technology described in the Non-patent Literature 6, for example, in a case where the motor (induction motor) is directly connected to an existing commercial power source having a frequency of 50 Hz or 60 Hz to be driven at a constant speed, when design is changed to enable variable speed driving by introducing a new modular multilevel inverter, a new speed sensor is preferably fitted to the motor. There may be cases that the new speed sensor may not be fitted due to a motor structure, or a wiring path of the speed sensor may not be secured because the modular multilevel inverter installed in an electric room and the motor installed on the site are far from each other. It is therefore desired that in a field of a large-capacity fan or blower, the motor can be practically driven at a variable speed without using any speed sensor.

The present invention has been made in view of the above-mentioned problems, and has an object to provide a method and an apparatus for starting a speed sensorless motor, which can stably start the motor by using a modular multilevel cascade inverter of a double star chopper cell without using any speed sensor.


Solution to Problem

To achieve the object, according to a first aspect of the present invention, there is provided a speed sensorless motor starting method that starts a motor by using an inverter. The inverter is a modular multilevel inverter including first and second arms each including a chopper cell that includes two semiconductor switches connected in series and a DC capacitor connected to the two semiconductor switches in parallel, each terminal of one of the two semiconductor switches serving as an output terminal, the same numbers of chopper cells being cascade-connected in the first and second arms via the output terminals of the chopper cells, and a three-terminal coupled reactor including a first terminal, a second terminal, and a third terminal located on a winding wire between the first terminal and the second terminal, the first arm being connected to the first terminal, the second arm being connected to the second terminal, and the motor to be driven being connected to the third terminal, and a DC power supply voltage being applied to each of the terminals of sides of the first and second arms to which the three-terminal coupled reactor is not connected. The method includes a current command value creation step of creating a current command value by using an amplitude command value and a frequency command value increased from 0 to a prescribed value over a predetermined period of time, and a motor start control step of starting the motor by performing control so that a motor driving current output from the third terminal can follow the current command value.

In other words, according to the first aspect of the present invention, a speed sensorless motor starting apparatus for starting a motor includes the inverter, a current command value creation unit configured to create a current command value by using an amplitude command value and a frequency command value increased from 0 to a prescribed value over a predetermined period of time, and a motor start control unit configured to start the motor by performing control so that a motor driving current output from the third terminal can follow the current command value.

According to a second aspect of the present invention, there is provided a speed sensorless motor starting method that starts a motor by using an inverter. The inverter is a modular multilevel inverter including first and second arms each including a chopper cell that includes two semiconductor switches connected in series and a DC capacitor connected to the two semiconductor switches in parallel, each terminal of one of the two semiconductor switches serving as an output terminal, and a reactor, the same numbers of chopper cells being cascade-connected in the first and second arms via the output terminals of the chopper cells, and the reactor being connected to an arbitrary position among the cascade-connected chopper cells, a DC power supply voltage being applied to each of the terminals of unconnected sides of the first and second arms, and the motor to be driven being connected to a connection terminal of the first arm and the second arm. The method includes a current command value creation step of creating a current command value by using an amplitude command value and a frequency command value increased from 0 to a prescribed value over a predetermined period of time, and a motor start control step of starting the motor by performing control so that a motor driving current output from the connection terminal of the first arm and the second arm can follow the current command value.

In other words, according to the second aspect of the present invention, a speed sensorless motor starting apparatus for starting a motor includes the inverter, a current command value creation unit configured to create a current command value by using an amplitude command value and a frequency command value increased from 0 to a prescribed value over a predetermined period of time, and a motor start control unit configured to start the motor by performing control so that a motor driving current output from the connection terminal of the first arm and the second arm can follow the current command value.

According to the first and second aspects of the present invention, each of the semiconductor switches includes a semiconductor switching element for supplying a current in one direction when turned ON, and a feedback diode connected to the semiconductor switching element in antiparallel.


Advantageous Effects of Invention

According to the present invention, AC voltage fluctuation of the DC capacitor in the modular multilevel inverter used for motor driving is suppressed without using a speed sensor, and thus the motor can be stably started. The present invention provides excellent characteristics such as unnecessity of any speed sensor, easy control, suppression of electromagnetic noise (EMI), and a reduction of torque pulsation. According to the control of the present invention, no excess current is generated because of the feedback loop of a primary current. The present invention is particularly suited to a device of a square reduction torque load such as a fan, a blower, a pump, or a compressor in which a speed change or a torque change is gentle.

Brief Description of the Drawings

FIG. 1 is a principle block diagram illustrating a speed sensorless motor starting apparatus according to a first embodiment of the present invention;
FIG. 2 is a flowchart illustrating an operation flow of a speed sensorless motor starting method according to the first embodiment of the present invention;
FIG. 3 is a circuit diagram illustrating a modular multilevel inverter used in the first embodiment of the present invention;
FIG. 4 is a block diagram illustrating primary current feedback control according to the first embodiment of the present invention;
FIG. 5 is a block diagram illustrating an equivalent circuit per phase when a focus is on a secondary interlinkage magnetic flux of a motor (induction motor) according to the first embodiment of the present invention;
FIG. 6 is a phasor graph of a primary current;
FIG. 7 is a diagram illustrating a circuit using an experiment for the speed sensorless motor starting method according to the first embodiment of the present invention;
FIG. 8 is a graph illustrating an experimental result on starting characteristics during no load in the speed sensorless motor starting apparatus according to the first embodiment of the present invention;
FIG. 9 is a graph illustrating an experimental result on starting characteristics when load torque is 20% of rated torque in the speed sensorless motor starting apparatus according to the first embodiment of the present invention;
FIG. 10 is a graph illustrating an experimental result on starting characteristics when load torque is 20% of the rated torque in the speed sensorless motor starting apparatus according to the first embodiment of the present invention;
FIG. 11 is a graph illustrating an experimental result on starting characteristics when load torque is 40% of the rated torque in the speed sensorless motor starting apparatus according to the first embodiment of the present invention;
FIG. 12 is a graph illustrating an experimental result on steady-state characteristics during an extremely low-speed operation of the motor when a frequency command value f* is set to 0.5 Hz in the speed sensorless motor starting apparatus according to the first embodiment of the present invention;
FIG. 13 is a graph illustrating an experimental result on steady-state characteristics during the extremely low-speed operation of the motor when a frequency command value f* is set to 15 Hz in the speed sensorless motor starting apparatus according to the first embodiment of the present invention;
FIG. 14 is a graph illustrating an experimental result on steady-state characteristics during the extremely low-speed operation of the motor when a frequency command value f* is set to 20 Hz in the speed sensorless motor starting apparatus according to the first embodiment of the present invention;
FIG. 15 is a circuit diagram illustrating a modular multilevel inverter according to a second embodiment of the present invention;
FIG. 16 is a circuit diagram illustrating a main circuit configuration of a modular multilevel inverter;
FIG. 17 is a circuit diagram illustrating a chopper cell that is a component of the modular multilevel inverter;
FIG. 18 is a circuit diagram illustrating a three-terminal coupled reactor that is a component of the modular multilevel inverter;
FIG. 19 is a block diagram illustrating averaging control of DC capacitors in the modular multilevel inverter;
FIG. 20 is a block diagram illustrating balancing control of the DC capacitors in the modular multilevel inverter;
FIGS. 21A and 21B are block diagrams each illustrating generation of an output voltage command value for each chopper cell in the modular multilevel inverter;
FIG. 22 is a circuit diagram illustrating a main circuit configuration of a modular multilevel inverter according to another example; and
FIGS. 23A to 23C are circuit diagrams each illustrating an arrangement example of a reactor in the modular multilevel inverter illustrated in FIG. 22.

Description of Embodiments

First and second embodiments described below are mainly directed to a u phase, but the same applies to v and w phases. In each embodiment, as an example, the number of chopper cells is eight in a modular multilevel cascade inverter (MMCI) of a double star chopper cell (DSCC). However, the present invention is not limited to this number, as long as the number of chopper cells is even.

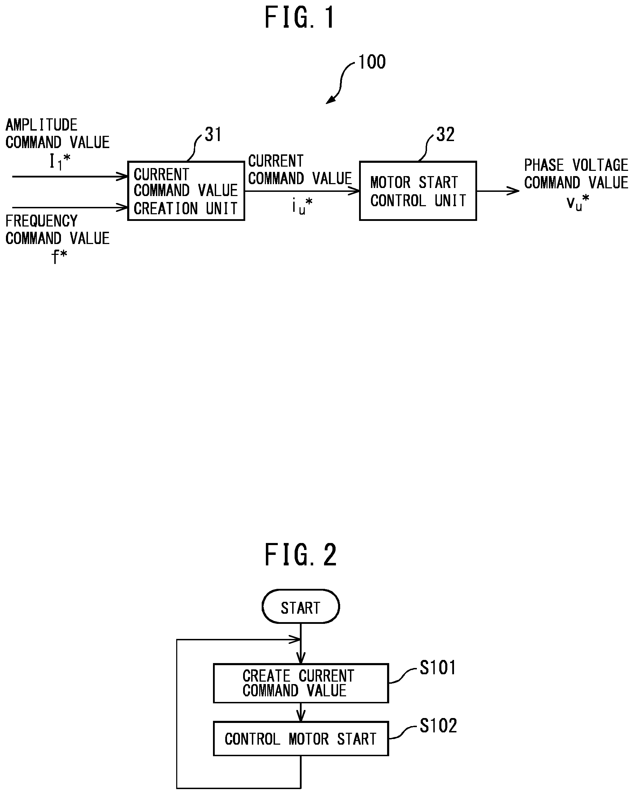

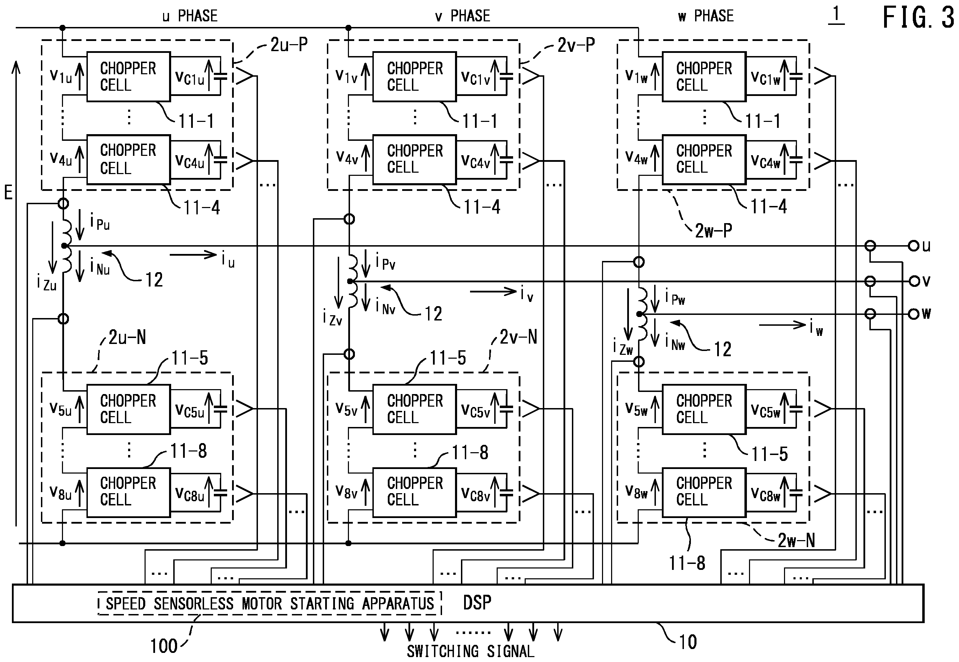

FIG. 1 is a principle block diagram illustrating a speed sensorless motor starting apparatus according to the first embodiment of the present invention. FIG. 2 is a flowchart illustrating an operation flow of a speed sensorless motor starting method according to the first embodiment of the present invention. FIG. 3 is a circuit diagram illustrating a modular multilevel inverter used in the first embodiment of the present invention.

The first embodiment of the present invention relates to a case where the modular multilevel inverter described above referring to FIGS. 16 to 21 is used for motor driving. In other words, a circuit configuration itself of the modular multilevel inverter 1 illustrated in FIG. 3 is similar to that illustrated in FIG. 16, chopper cells 11-j are similar to those illustrated in FIG. 17, and a three-terminal coupled reactor 12 is similar to that illustrated in FIG. 18. Further similarly, each of semiconductor switches SW 1 and SW 2 in each of the chopper cells 11-j includes a semiconductor switching element S for supplying a current in one direction when turned ON, and a feedback diode D connected to the semiconductor switching element S in antiparallel.

As illustrated in FIG. 3, switching signals used for instructing switching operations of the semiconductor switches SW 1 and SW 2 in each of the chopper cells 11-j of the modular multilevel inverter 1 are generated by a DSP to which a reference number 10 is given. Arm currents $i_{Pu}$, $i_{Pv}$, and $i_{Pw}$ flowing through first arms 2u-P, 2v-P, and 2w-P of the modular multilevel inverter 1, arm currents $i_{Nu}$, $i_{Nv}$, and $i_{Nw}$ flowing through second arms 2uN, 2v-N, and 2w-N, voltages $V_{Cju}$, $V_{Cjv}$, and $V_{Cjw}$ of DC capacitors in the chopper cells 11-j, and currents $i_u$, $i_v$, and $i_w$ of respective phases (i.e., currents of respective phases flowing into motor that is load) output from the inverter 1, detected by a known detector (not illustrated), are input to the DSP 10 and arithmetic processing is executed.

Control of the modular multilevel inverter 1 is briefly divided into DC capacitor voltage control for suppressing pulsation of a DC capacitor voltage in each chopper cell, and primary current control. Speed sensorless motor starting control according to the first embodiment of the present invention is included in the primary current control.

First, the DC capacitor voltage control will be described. In the modular multilevel inverter 1, as described in the Non-patent Literature 2, the DC capacitor voltage in each chopper cell fluctuates in inverse proportion to a frequency of a primary current (arm current). Accordingly, in the first embodiment of the present invention, for voltage control of the DC capacitor in each chopper cell of the modular multilevel inverter 1, during a low-speed operation of a motor, the square-wave superimposition method for superimposing a square-wave common mode voltage of 50 Hz on the circulating current, which is described in the Non-patent Literature 6, is employed. During a middle-speed operation of the motor, the control method described in the Non-patent Literature 4 not using any common mode voltage is employed. Specific control is as follows.

For the DC capacitor voltage control during the low-speed operation of the motor, as described in the Non-patent Literature 6, the method using the square-wave common mode voltage and the circulating current is utilized. In this case, a maximum value $|i_{Pu}|_{max}$ of the arm current can be approximated by the equation (15), where $V_{dc}$ denotes a DC linkage voltage, $V_{com}$ denotes a common mode voltage effective value for a square-wave circulating current command, and $I_1$ denotes an effective value of the arm current $i_u$ of the u phase (hereinafter, may be referred to as "effective value of primary current").

$$\left| i_{Pu} \right|_{max} \fallingdotseq \left( \frac{V_{dc}}{2\sqrt{2}V_{com}} + \frac{1}{\sqrt{2}} \right) I_1 \qquad \cdots (15)$$

A first term of the equation (15) indicates a square-wave circulating current, and a second term indicates a primary current shared by the upper and lower arms of the modular multilevel inverter 1. The common mode voltage $V_{com}$ superimposed on a primary voltage during the low-speed operation of the motor is preferably reduced as an increase of a motor rotational speed (increase of inductive voltage) in order to prevent overmodulation of the converter. In this case, the circulating current command value given by the first term of the equation (15) increases in inverse proportion to the common mode voltage $V_{com}$. In order to prevent this increase, the square-wave circulating current command value is given as a fixed value, and reduced as in the case of the common mode voltage. The rotational speed for reducing the common mode voltage $V_{com}$ is set so that a modulation degree m of the modular multilevel inverter represented by the following equation (16) can be prevented from being overmodulation and a fluctuation range $\Delta V_{Cju}$ of the DC capacitor voltage represented by the following equation (17) can be equal to or lower than a design value. In the equations (16) and (17), C denotes capacitance of the DC capacitor, $V_C$ denotes an average value of DC capacitor voltages, $V_1$ denotes a primary voltage effective value, and f denotes a primary current frequency.

$$m = \frac{1}{V_c}\left(\frac{V_1 + V_{com}}{2\sqrt{2}} + \frac{V_{dc}}{8}\right) \leq 1.0 \quad \cdots (16)$$

$$\Delta V_{Cju} = \frac{\sqrt{2}I_1}{4\pi fC} \quad \cdots (17)$$

As described above, in the DC capacitor voltage control of the modular multilevel inverter 1, the fluctuation of the DC capacitor voltage is suppressed by detecting the DC capacitor voltage and the arm current to control the circulating current. Thus, according to the first embodiment of the present invention, a voltage detection unit configured to detect a voltage of the DC capacitor in each of the chopper cells 11-j of the modular multilevel inverter 1, and a current detection unit configured to detect an arm current flowing through each arm are provided. In the modular multilevel inverter 1, since each arm current is detected to control the DC capacitor voltage, a primary current of the induction motor can be detected by calculation without adding any current sensor. Therefore, a circuit configuration is not complex.

Next, the primary current control of the modular multilevel inverter 1 will be described. The speed sensorless motor starting control according to the first embodiment of the present invention is included in the primary current control, and executed by a speed sensorless motor starting apparatus 100. The speed sensorless motor starting apparatus 100 is provided as one of the functions of the above-described DSP 10. As illustrated in FIG. 1, the speed sensorless motor starting apparatus 100 according to the first embodiment of the present invention includes a current command value creation unit 31 configured to create a current command value $i_u{}^*$ by using an amplitude command value $I_1{}^*$ of the primary current and a frequency command value f* increased from 0 to a prescribed value over a predetermined period of time, and a motor start control unit 32 configured to start the motor by performing control so that a motor driving current $i_u$ output from the third terminal c (see FIG. 18) can follow the current command value $i_u{}^*$. The motor start control unit 32 outputs a phase voltage command value $V_u{}^*$ for causing the motor driving current $i_u$ to follow the current command value $i_u{}^*$. The case of the u phase has been described, but the same or similar current command value creation units 31 and motor start control units 32 are provided at the v and w phases.

The speed sensorless motor starting apparatus 100 operates according to a flowchart illustrated in FIG. 2. Arithmetic processing in below-described steps S101 and S102 is executed by the DSP 10. First, in step S101, the current command value creation unit 31 creates a current command value $i_u{}^*$ by using an amplitude command value $I_1{}^*$ of the primary current and a frequency command value f* increased from 0 to a prescribed value over a predetermined period of time. The current command value $i_u{}^*$ is represented by the equation (18).

$$i_u{}^* = I_1{}^* \sin(2\pi f^* t) \quad \cdots (18)$$

Any frequency command value f* may be used as long as the value increases from 0 to the prescribed value over the predetermined period of time. For example, a frequency command value increased in a ramp function manner may be used. The frequency command value f* is stored beforehand in, for example, a memory, and the current command value creation unit 31 in the DSP 10 reads this value from the memory at the time of starting the motor to use it for creating a current command value $i_u{}^*$.

The amplitude command value $I_1{}^*$ may be a fixed value or a variable value. For the amplitude command value $I_1{}^*$, for example, an optimal value may be obtained beforehand by experiment when inertia of the motor to be driven is known, and this optimal value may be used as a fixe value. In addition, for example, a control circuit for creating the amplitude command value $I_1{}^*$ may be separately provided, and the amplitude command value $I_1{}^*$ may be created each time according to fluctuation in inertia of the motor to be driven.

Details on how the frequency command value f* and the amplitude command value $I_1{}^*$ are determined will be described below.

In step S102 illustrated in FIG. 2, the motor start control unit 32 outputs a phase voltage command value $V_u{}^*$ represented by the equation (19) so that a motor driving current $i_u$ output from the third terminal c can follow the current command value $i_u{}^*$. In the equation (19), K denotes a proportional gain.

$$V_u^* = K\left(i_u^* - \dot{i}_u\right) \qquad \cdots (19)$$

Here, only the proportional control represented by the equation (19) is employed. However, the present invention is not limited to this proportional control, and for example, proportional integral (PI) control may be employed.

The phase voltage command value for starting the motor is created for each of the u, v, and w phases, and used as a command for switching operations of the semiconductor switches SW 1 and SW 2 in each of the chopper cells 11-j in the modular multilevel inverter 1.

In the above-mentioned speed sensorless motor starting apparatus 100, the primary currents ($i_u$, $i_v$, and $i_w$ illustrated in FIG. 3) of the motor (induction motor) are detected, and primary current feedback control is configured by using the detected primary currents. Hereinafter, this configuration will be described.

In an ideal state, the square-wave circulating current does not appear in any DC linkage current or primary current since the current circulates between legs of the modular multilevel inverter 1. However, it is difficult to realistically generate a square-wave circulating current. Even when the square-wave circulating current included in the arm current is set, by the equation (15), to a maximum value $V_{dc}/2$ enabling the common mode voltage to be superimposed thereon, amplitude is 50% of the primary current. Therefore, when this circulating current appears in the primary current during the low-speed operation of the motor, the circulating current serves as disturbance for the motor control. In order to suppress such disturbance, the feedback control of the primary current is carried out.

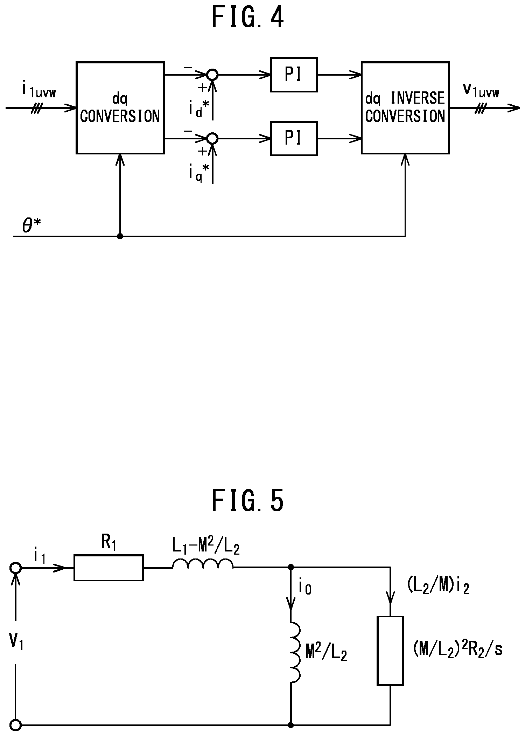

FIG. 4 is a block diagram illustrating the primary current feedback control according to the first embodiment of the present invention. In order to improve performance of the primary current control, dq conversion is carried out by using a phase $\theta^*$ obtained from the frequency command value $f^*$ of the primary current to control a result as a DC amount. Current command values $i_d^*$ and $i_q^*$ of d and q axes are set, by first determining an amplitude command value $I_1^*$ of the primary current by a method described below, to equally share the amplitude command value as represented by the equation (20).

$$I_d^* = I_q^* = \sqrt{\frac{3}{2}} I_1^* \qquad \cdots (20)$$

FIG. 5 is a diagram illustrating an equivalent circuit per phase when a focus is on a secondary interlinkage magnetic flux of the motor (induction motor) according to the first embodiment of the present invention. Hereinafter, a steady state is assumed. An excitation current $I_0$ of the equivalent circuit illustrated in FIG. 5 corresponds to a secondary interlinkage magnetic flux current, and a secondary current $I_2$ corresponds to a torque current. The excitation current $I_0$ and the secondary current $I_2$ of the motor (induction motor) are orthogonal to each other.

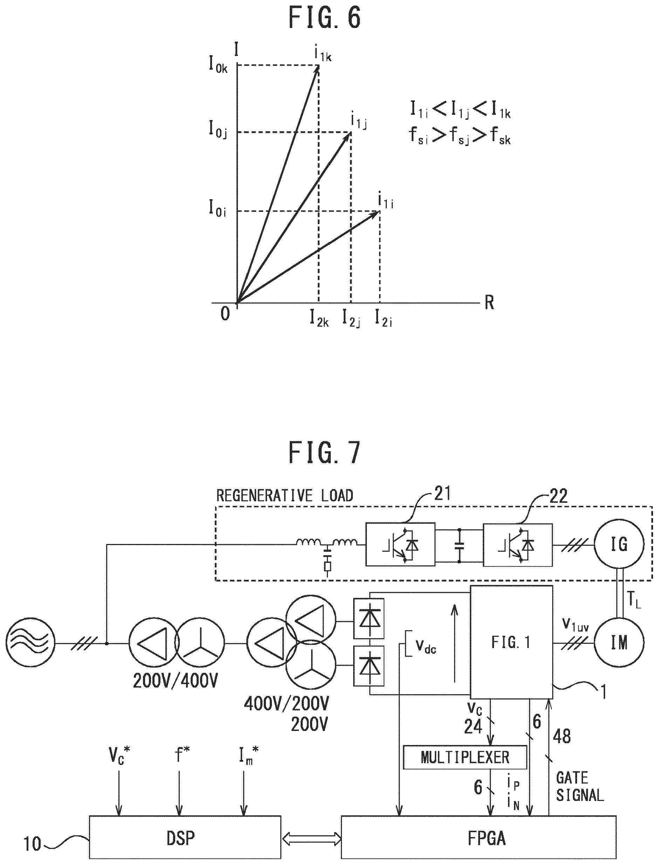

FIG. 6 is a phasor graph of a primary current. It is assumed that there is a relationship of $I_{1i} < I_{1j} < I_{1k}$ among three primary current effective values $I_{1i}$, $I_{1j}$, and $I_{1k}$. A current of an imaginary axis I corresponds to the excitation current $I_0$ illustrated in FIG. 4, and a current of a real axis R corresponds to the secondary current $I_2$ (in FIGS. 5 and 6, excitation current $I_0$ and secondary current $I_2$ are represented with "dots ·", but the dots are omitted herein). Motor torque $T_w$ is represented by the equation (21) from the equivalent circuit, where P denotes the number of pole pairs.

$$T_M = 3pMI_0I_2 \qquad \cdots (21)$$

As can be understood from FIG. 5 and the equation (21), the motor torque $T_w$ is proportional to an area of a triangle surrounded with $I_1$, $I_2$, and $I_0$. Under the condition of constant load torque, when the primary current phasor changes in order of $I_{1i}$, $I_{1j}$, and $I_{1k}$, a secondary current effective value decreases in order of $I_{2i}$, $I_{2j}$, and $I_{2k}$, while an excitation current effective value increases in order of $I_{0i}$, $I_{0j}$, and $I_{0k}$. This means that the excitation current and the secondary current change so as to maintain constant the area of the triangle surrounded with $I_1$, $I_2$, and $I_0$, i.e., to maintain the motor torque.

A slip frequency $f_s$ is represented by ratio of the secondary current effective value $I_2$ and the excitation current effective value $I_0$, and expressed by the equation (22) .

$$f_S = \frac{R_2}{2\pi M} \frac{I_2}{I_0}$$

$$(22)$$

In FIG. 6, there is a relationship of $f_{si} > f_{sj} > f_{sk}$ among slip frequencies, which is uniquely determined based on the motor toque and the primary current at the end.

Next, a method for determining a current command value $i_u{}^*$ will be described.

An amplitude command value $I_1{}^*$ of the primary current that are effective values of the current command value $i_u{}^*$ given in a feedforward manner and a frequency command value $f^*$ are determined on the basis of the motor torque $T_w$ and the load torque. A primary current effective value $I_1$ is represented by the following equation (23).

$$I_1 = \sqrt{I_0^2 + I_2^2}$$

$$(23)$$

By the equations (21) and (22), an excitation current effective value $I_0$ and a secondary current effective value $I_2$ are determined on the basis of the motor torque $T_w$ and the slip frequency $f_s$. By the equation (23), a primary current effective value $I_1$ is provided. An amplitude command value $I_1{}^*$ of the primary current is set so that a current capacity of the modular multilevel inverter 1 can be prevented from increasing and a maximum value of the arm current can be equal to or less than a rated current of the induction motor.

In order to accelerate the motor (the induction motor), the motor torque $T_M$ is determined so as to satisfy the equation (24). In the equation (24), $J_M$ denotes an inertia moment of the motor, $J_L$ denotes an inertia moment of a load, $\omega_m$ denotes a rotational angle frequency of the motor, and $T_L$ denotes load torque.

$$T_M - T_L = J \frac{d\omega_m}{dt} > 0$$

$$(24)$$

A frequency command value $f^*$ corresponds to the rotational angle frequency $\omega_m$ of the motor, and a ratio of its change is set on the basis of a relationship between the set motor torque $T_M$ and the set load torque $T_L$ so as to satisfy the equation (24).

The above-mentioned current command value $i_u{}^*$ is determined based on the equivalent circuit illustrated in FIG. 5 or by experiment.

When the current command value $i_u{}^*$ is determined based on the equivalent circuit illustrated in FIG. 5, load torque $T_L$ is estimated to analytically determine the current command value by using a motor constant. When a square reduction torque load such as a fan, a blower, a pump, or a compressor is assumed, necessary start torque may be 30 to 40%. When an induction motor rotational speed increases, the load torque $T_L$ is reduced to exhibit characteristics proportional to a square of the motor rotational speed. When such a square reduction torque load is connected to the motor, highly efficient motor starting can be achieved by determining the current command value $i_u{}^*$ on the basis of square reduction load torque characteristics.

On the other hand, when load torque characteristics with respect to the rotational speed are unknown, the current command value $i_u{}^*$ is determined by experiment. An amplitude command value $I_1{}^*$ of the current command value $i_u{}^*$ is experimentally adjusted within a range where the maximum value of the arm current does not exceed a rated current of the motor, and a change rate (increase rate) of the frequency command value $f^*$ is adjusted to satisfy the equation (24), thereby generating motor torque equal to a sum of load torque and acceleration torque. Thus, according to the present invention, as in the case of the V/f control, the current command value $i_u{}^*$ can be determined without using any motor constant or any fixed number of cables.

Next, comparison of the present invention with the conventional V/f control and the conventional slip frequency control will be described. The speed sensorless motor starting apparatus 100 according to the first embodiment of the present invention may be similar to the conventional V/F control or slip frequency control in that the primary currents ($i_u$,

$i_v$, and $i_w$ illustrated in FIG. 3) of the motor (induction motor) are detected, and feedback control of the primary current $I_1$ is configured by using the detected primary currents. However, the speed sensorless motor starting apparatus 100 according to the present invention is characterized by the open loop control in which the amplitude command value $I_1^*$ and the frequency command value $f^*$ of the primary current are given in the feedforward manner according to the load torque.

Table 1 illustrates a relationship between the present invention and the conventional V/f control, the conventional slip frequency control.

Table 1

|  | V/f control | Slip frequency control | Present invention |
|---|---|---|---|
| Independent variable | $V_1$ and $f$ | $I_1$ and $f_s$ | $I_1$ and $f$ |
| Dependent variable | $I_1$ and $f_s$ | $V_1$ and $f$ | $V_1$ and $f_s$ |
| Voltage control | Feedforward control |  |  |
| Current control |  | Feedback control | Feedback control |
| Speed sensor | No | Yes | No |

First, comparison of the control according to the present invention with the V/f control will be described. In the V/f control, independent variables are a primary voltage $V_1$ and a primary frequency $f$, and feedforward control of the primary voltage $V_1$ is carried out. As a result, a primary current $I_1$ and a slip frequency $f_s$ that are dependent variables are determined. On the other hand, in the control according to the present invention, independent variables are a primary current $I_1$ and a primary frequency $f$, and feedback control of the primary voltage $I_1$ is carried out. As a result, a primary voltage $V_1$ and a slip frequency $f_s$ that are dependent variables are determined. In the V/f control, an excess current generated during a sudden change of the load torque is a problem. Accordingly, in the V/f control, to suppress the excess current, generally, a current sensor is fitted to monitor the primary current, and a current limit is applied. On the other hand, in the control according to the present invention, no excess current is generated since the feedback loop of the primary current is configured. In addition, in the control according to the present invention, by setting motor torque based on the estimated load torque, a slip frequency given as a dependent variable can be arbitrarily set. In both the V/f control and the control according to the present invention, a detected motor speed is not used as a control parameter. Therefore, any speed sensor may not be necessary.

Next, comparison of the control according to the present invention with the slip frequency control will be described. In the slip frequency control, a primary current $I_1$ and a slip frequency $f_s$ are provided as independent variables. As a result, a primary current $V_1$ and a primary frequency $f$ that are dependent variables are determined. However, different from the conventional slip frequency control in which a motor rotational speed is detected by using a speed sensor to determine amplitude of the primary current and a command value of a frequency, in the control according to the present invention, an amplitude command value $I_1^*$ of the primary current and a frequency command value $f^*$ are provided in a feedforward manner. Accordingly, while the speed sensor is indispensable in the slip frequency control, any speed sensor is not necessary in the control according to the present invention. In addition, while the slip frequency can be controlled even when the load torque changes in the slip frequency control, the slip frequency changes according to the load torque in the control according to the present invention.

Therefore, the control according to the present invention has characteristics of both the conventional V/f control and the conventional slip frequency control. Specifically, the control according to the present invention is characterized in that the primary current feedback control enables the motor to be stably started without generating any excess current and without any speed sensor. However, in the control according to the present invention, the slip frequency is not controlled at the time of the sudden change of the load torque. The control according to the present invention may therefore be suited for variable speed driving of a large-capacity fan, blower or compressor which is a square reduction load and in which a speed change or a load torque change is relatively gentle.

Next, an experimental result of the speed sensorless motor starting apparatus according to the first embodiment of the present invention will be described.

FIG. 7 is a diagram illustrating a circuit used for an experiment on the speed sensorless motor starting method according to the first embodiment of the present invention.

For the experiment, the circuit illustrated in FIG. 7 was used. Table 2 illustrates circuit constants of the modular multilevel inverter illustrated in FIG. 7. For a coupled inductor in the Table 2, percentage impedance based on 400 V, 15 kW, and 50 Hz is described.

Table 2

| | | |
|---|---|---|
| Rated effective power | | 15 kW |
| Rated line voltage effective value | $V_s$ | 400 V |
| DC side rated voltage | $V_{dc}$ | 560 V |
| Coupled inductor | $l_{ab}$ | 4.0 mH (12%) |
| Capacitance of DC capacitor in chopper cell | C | 3.3 mF |
| DC capacitor voltage | $V_c$ | 140 V |
| Circuit capacitor constant | H | 52 ms |
| Triangle wave carrier frequency | $f_c$ | 2 kHz |
| Equivalent carrier frequency | | 16 kHz |

A control system by experiment was realized by full digital control based on the DSP and the FPGA, dead time was 4 μ seconds, and a carrier frequency $f_c$ of each of the chopper cells 11-j was 2 kHz. For the DSP, TMS 320 C 6713 made by Texas Instruments, Inc., was used. For the FPGA, Altera Cyclone II made by Altera Corp., was used.

Table 3 illustrates specifications of an induction motor used as a load in the experiment.

Table 3

| | | |
|---|---|---|
| Rated output | P | 15 kW |
| Rated line voltage effective value | V | 380 V |
| Rated frequency | f | 50 Hz |
| Rated current effective value | I | 32 A |
| Rated slip | s | 1.8% |
| Number of pole pairs | p | 2 |
| inertia moment | $J^*_M$ | 0.2 kg·m2 |
| $^*J_L = J_M$ | | |

A regenerative load illustrated in FIG. 7 is for simulating start load torque of the motor driven by the inverter 1 and includes an induction motor IG rated at 190 V, 15k kW and having four pole pairs, and converters 21 and 22 of back-to-back (BTB) configurations. Thus, by applying vector control, instantaneous load torque $\tau_L$ of an induction motor IM was made variable.

Any electrolytic capacitor or any film capacitor is not connected to a three-phase 12-pulse rectification circuit of the experiment system illustrated in FIG. 7 or the DC link illustrated in FIG. 3. In FIG. 7, a transformer for the three-phase 12-pulse rectification circuit is used. However, when a three-phase 6-pulse rectification circuit is used, a transformerless system can be realized.

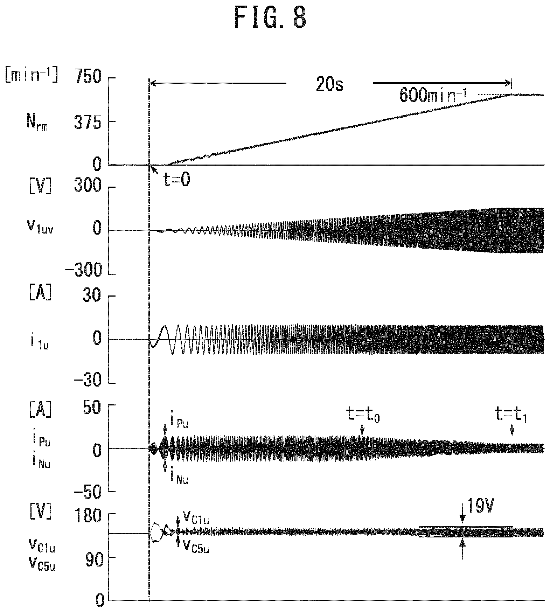

FIGS. 8 to 11 illustrate experimental results on starting characteristics of the speed sensorless motor starting apparatus according to the first embodiment of the present invention. For a primary line voltage $V_{1uv}$ illustrated in each of FIGS. 8 to 11, a fundamental wave voltage was extracted by using a low-pass filter (cutoff frequency 400 Hz) intended to remove switching ripples. In the experiment, a DC capacitor voltage command value $V_c^*$ in each of the chopper cells 11-j of the modular multilevel inverter 1 was set to 140 V. For suppression control of DC capacitor voltage fluctuation during the low-speed operation of the motor, the square wave superimposition method described in the Non-patent Literature 6 was employed. An effective value $V_{com}$ of a common mode voltage of a square wave to be superimposed was set to 240 V (64% when standardized at $V_{DC}/2 = 280$ V), and its frequency $f_{com}$ was set to 50 Hz. Change rates of an amplitude command value $I_1^*$ and a frequency command value f* of the primary current were determined by experiment performed beforehand.

FIG. 8 is a graph illustrating the experimental result on starting characteristics during no load in the speed sensorless motor starting apparatus according to the first embodiment of the present invention.

In the experiment illustrated in FIG. 8, the amplitude command value $I_1^*$ of the primary current was set to 6.4 A (20%), and the frequency command value f* was given by a ramp function to be increased from 0 Hz to 20 Hz for 20 seconds. Acceleration torque in this case is calculated to be 1.3% of rated torque by the equation (24). The primary line voltage $V_{1uv}$ exhibits characteristics similar to those in the conventional V/f control, and its amplitude increases in proportion to a rotational speed. The rotational speed $N_{rm}$ of the motor increases from 0 to a synchronous speed 600 min$^{-1}$ in a ramp function shape. The common mode voltage of the square wave and the circulating current to be superimposed during the low-speed operation of the motor are reduced in a ramp function shape during a period of $t = t_0$ to $t = t_1$. A primary current frequency for starting the reduction is set to a value that prevents a PWM modulation degree of the converter from being overmodulation. In the experiment, the reduction was carried out during a period of frequencies 12 Hz to 20 Hz where a modulation degree was 0.9. In arm currents $i_{Pu}$ and $i_{Nu}$, amplitude is large before $t = t_0$ because of the superimposition of the square-wave circulating current, and small after $t = t_1$ because the square-wave circulating current is 0. DC capacitor voltages $V_{C1u}$ and $V_{C5u}$ exhibit good following to the command value 140 V. Fluctuation widths of the DC capacitor voltages $V_{C1u}$ and $V_{C5u}$ were 19 V (14%).

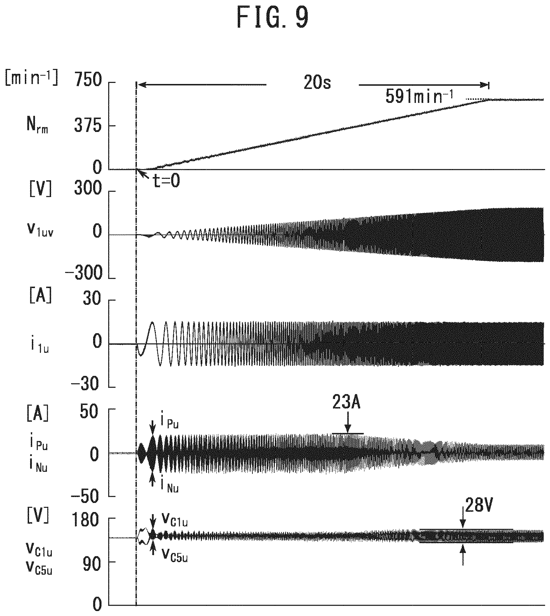

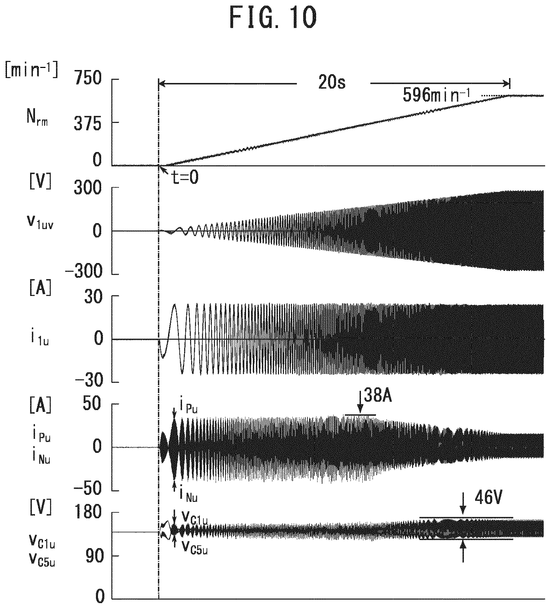

FIGS. 9 and 10 are graphs illustrating the experimental results on starting characteristics when load torque is 20% of rated torque in the speed sensorless motor starting apparatus according to the first embodiment of the present invention.

The amplitude command value of the primary current in the experiment illustrated in FIG. 9 was set to a current value $I_1^* = 10$ A (31%) adjusted so as to be near a rated slip frequency (0.36 Hz). A final value of the rotational speed $N_{rm}$ of the motor was 591 min$^{-1}$, and a slip frequency at the time was 0.30 Hz. Maximum values of arm currents $i_{Pu}$ and $i_{Nu}$ were 23 A (51%) equal to or lower than a rated current (45 A) of the motor. Fluctuation widths of DC capacitor voltages $V_{C1u}$ and $V_{C5u}$ were 28 V (20%).

The amplitude command value of the primary current in the experiment illustrated in FIG. 10 was increased to a current value $I_1^* = 10$ A (50%). From FIG. 10, it can be confirmed that the motor can be stably started even when the amplitude command value of the primary current is increased to an arbitrary value. A final value of the rotational speed $N_{rm}$ of the motor increased to 596 min$^{-1}$, and a slip frequency decreased to 0.10 Hz. The decrease of the slip frequency means that the excitation current $I_0$ illustrated in FIG. 6 increased, and the secondary interlinkage magnetic flux increased. Because of the increase of $I_1^*$ from 10 A to 16 A, amplitude of the primary line voltage $V_{1uv}$ was larger than that in the experiment result illustrated in FIG. 8. Maximum values of arm currents $i_{Pu}$ and $i_{Nu}$ were 38 A (84%) equal to or lower than the rated current. Fluctuation widths of DC capacitor voltages $V_{C1u}$ and $V_{C5u}$ increased to 46 V (33%) because of the increase of $I_1$.

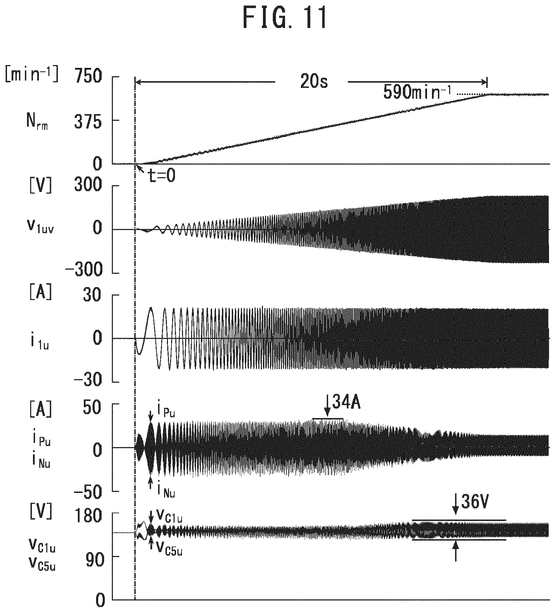

FIG. 11 is a graph illustrating the experimental result on starting characteristics when load torque is 40% of rated torque in the speed sensorless motor starting apparatus according to the first embodiment of the present invention.

The amplitude command value of the primary current in the experiment illustrated in FIG. 11 was set to a current value $I_1^* = 14$ A (43%) adjusted so as to be near the rated slip frequency. A final value of the rotational speed $N_{rm}$ of the motor was 590 min$^{-1}$, and a slip frequency at the time was 0.33 Hz. Maximum values of arm currents $i_{Pu}$ and $i_{Nu}$ were 34 A (76%) equal to or lower than the rated current. Fluctuation widths of DC capacitor voltages $V_{C1u}$ and $V_{C5u}$ were 36 V (26%).

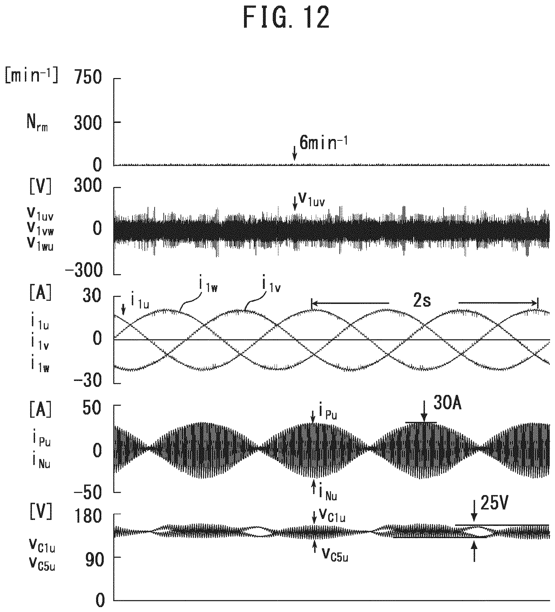

FIGS. 12 to 14 are graphs illustrating experimental results on steady-state characteristics in the speed sensorless motor starting apparatus according to the first embodiment of the present invention. In the experiments illustrated in FIGS. 12 to 14, load torque $T_L$ was set to 40% of rated torque, and a primary current command value was set to $I_1^* = 14$ A (43%).

FIG. 12 is a graph illustrating the experimental result on steady-state characteristics during an extremely low-speed operation of the motor when a frequency command value f* is set to 0.5 Hz in the speed sensorless motor starting apparatus according to the first embodiment of the present invention.

In the experiment illustrated in FIG. 12, a common code voltage $V_{com}$ to be superimposed was set to 180 V (64%). From FIG. 12, it can be understood that a DC capacitor voltage exhibits good following to the command value even during the extremely low-speed operation of the motor. A rotational speed $N_{rm}$ of the motor was 6 min$^{-1}$, and a slip frequency at the time was 0.30 Hz. Maximum values of arm currents $i_{Pu}$ and $i_{Nu}$ were 30 A (66%) equal to or lower than the rated current. Fluctuation widths of DC capacitor voltages $V_{C1u}$ and $V_{C5u}$ were 25 V (18%).

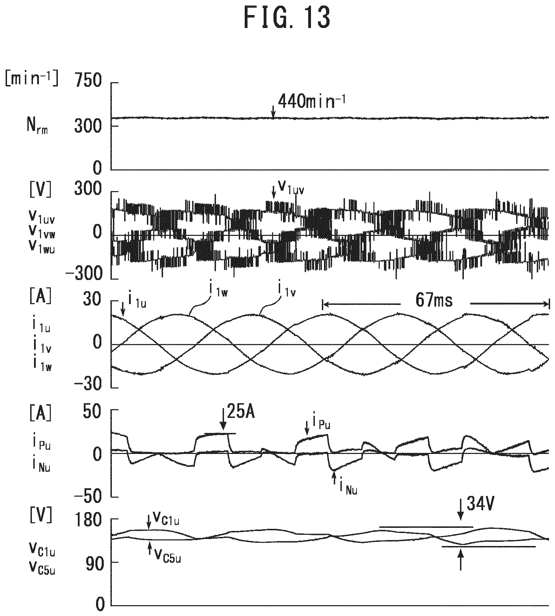

FIG. 13 is a graph illustrating the experimental result on steady-state characteristics during the extremely low-speed operation of the motor when a frequency command value f* is set to 15 Hz in the speed sensorless motor starting apparatus according to the first embodiment of the present invention.

In the experiment illustrated in FIG. 13, a common code voltage $V_{com}$ to be superimposed was set to 0 V at f* = 20 Hz. Accordingly, the common code voltage $V_{com}$ was 113 V (40%) at 15 Hz. Maximum values of arm currents $i_{Pu}$ and $i_{Nu}$ were 25 A (55%) which is lower than a case illustrated in FIG. 12 where the frequency command value f* was lower than that at 0.5 Hz because of the reduction of the square-wave circulating current of 50 Hz to be superimposed. At this time, a rotational speed $N_{rm}$ of the motor was 440 min$^{-1}$, and a slip frequency was 0.33 Hz. From FIG. 13, it can be understood that DC capacitor voltages $V_{C1u}$ and $V_{C5u}$ exhibit good following to the command value even during the common mode voltage reduction. Fluctuation widths of the DC capacitor voltages $V_{C1u}$ and $V_{C5u}$ were 36 V (26%).

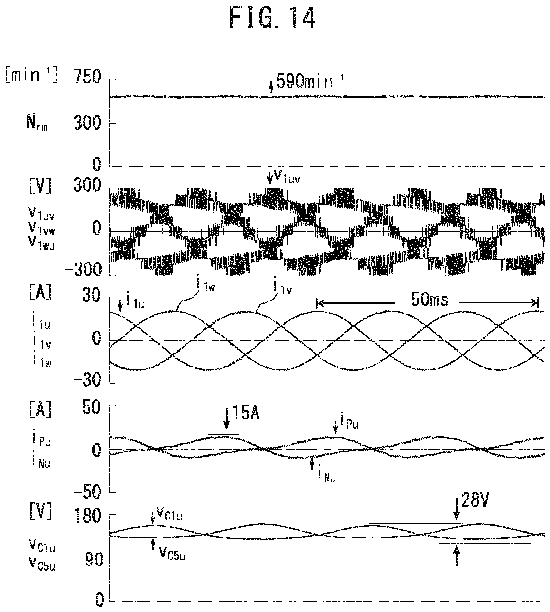

FIG. 14 is a graph illustrating the experimental result on steady-state characteristics during the extremely low-speed operation of the motor when a frequency command value f* is set to 20 Hz in the speed sensorless motor starting apparatus according to the first embodiment of the present invention.

In the experiment illustrated in FIG. 14, a common code voltage $V_{com}$ to be superimposed was set to 0 (0%). Maximum values of arm currents $i_{Pu}$ and $i_{Nu}$ were 15 A (33%) sufficiently lower than the rated current because the square-wave circulating current of 50 Hz was not superimposed. A rotational speed $N_{rm}$ of the motor was 590 min$^{-1}$, and a slip frequency was 0.33 Hz. Fluctuation widths of DC capacitor voltages $V_{C1u}$ and $V_{C5u}$ were 28 V (20%).

From the experimental results illustrated in FIGS. 8 to 14, it can be confirmed that in the speed sensorless motor starting apparatus according to the first embodiment of the present invention, the feedback control system of the primary current is configured and, by appropriately adjusting the primary current command value according to the load torque, the motor can be stably started from the zero speed to the middle speed.

In the above-mentioned first embodiment, the three-terminal coupled reactor is used. However, even by using the modular multilevel inverter 1 using the uncoupled reactor described above referring to FIG. 22, the operation principle of the speed sensorless motor starting method according to the first embodiment can be applied, and this is treated as a second embodiment herein.

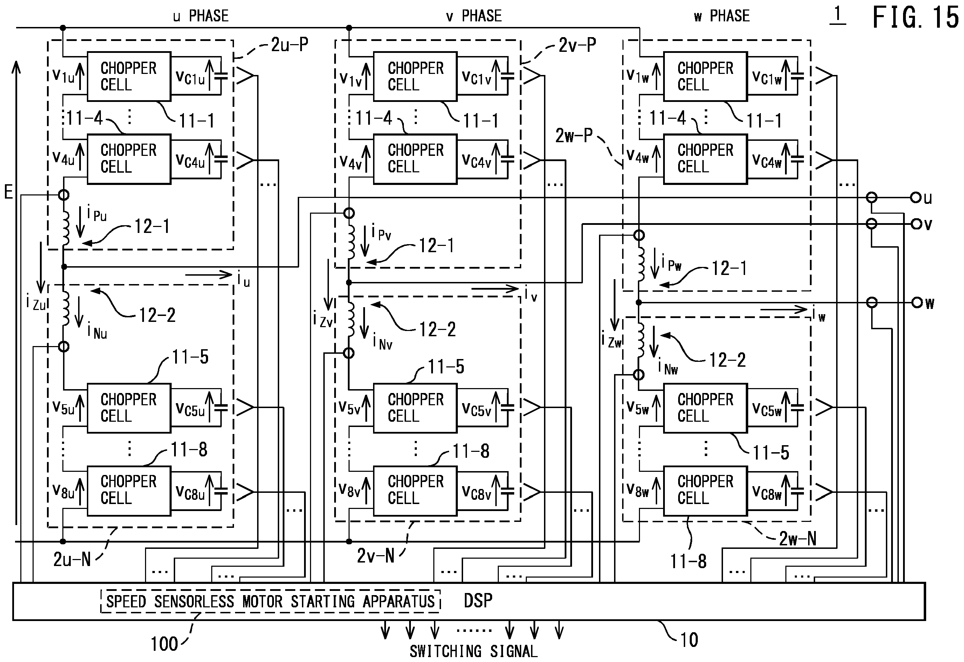

FIG. 15 is a circuit diagram illustrating the modular multilevel inverter according to the second embodiment of the present invention. Specifically, in the second embodiment of the present invention, the three-terminal coupled reactor 12 illustrated in FIG. 3 is replaced by uncoupled reactors 12-1 and 12-2 illustrated in FIG. 15. The output terminal of the modular multilevel inverter 1 is the third terminal of the three-terminal coupled reactor 12 in the first embodiment. However, in the second embodiment, in the case of a u phase, an output terminal is a connection terminal of a first arm 2u-P and a second arm 2u-N. Other circuit components, and an operation principle and a control method of a motor starting method using the modular multilevel inverter 1 are the same or similar to those of the first embodiment described above referring to FIGS. 1 to 14.

Industrial Applicability

The present invention can be applied to motor starting control when the modular multilevel inverter of the double star chopper cell is used for motor driving. The present invention is particularly suited for starting a motor connected to a load such as a fan, a blower or a compressor in which a speed change or a torque change is gentle, and to a square reduction torque load in which any rated start torque may not be necessary.

Reference signs list

| 1 | Modular multilevel inverter |
|---|---|
| 2u-P, 2v-P, and 2w-P | First arm |
| 2u-N, 2v-N, and 2w-P | Second arm |
| 10 | DSP |
| 11-1, 11-2, 11-3, and 11-4 | Chopper cell |
| 11-5, 11-6, 11-7, and 11-8 | Chopper cell |
| 12 | Three-terminal coupled reactor |
| 12-1, and 12-2 | Uncoupled reactor |
| 31 | Current command value creation unit |
| 32 | Motor start control unit |
| 100 | Speed sensorless motor starting apparatus |
| C | DC capacitor |
| D | Feedback diode |
| S | Semiconductor switching element |
| SW 1, and SW 2 | Semiconductor switch |

**Claims**

**1.** A speed sensorless motor starting method that starts a motor by using an inverter (1),
the inverter (1) including:

first and second arms (2u-P, 2v-P, 2w-P, 2u-N, 2v-N, 2w-P) each including a chopper cell (11-1, 11-2, 11-3, 11-4, 11-5, 11-6, 11-7, 11-8) that includes two semiconductor switches (SW1, SW2) connected in series and a DC capacitor (C) connected to the two semiconductor switches (SW1, SW2) in parallel, each terminal of one of the two semiconductor switches (SW1, SW2) serving as an output terminal, the same numbers of chopper cells (11-1, 11-2, 11-3, 11-4, 11-5, 11-6, 11-7, 11-8) being cascade-connected in the first and second arms (2u-P, 2v-P, 2w-P, 2u-N, 2v-N, 2w-P) via the output terminals of the chopper cells (11-1, 11-2, 11-3, 11-4, 11-5, 11-6, 11-7, 11-8); and

a three-terminal coupled reactor (12) including a first terminal (a), a second terminal (b), and a third terminal (c) located on a winding wire between the first terminal (a) and the second terminal (b), the first arm being connected to the first terminal (a), the second arm being connected to the second terminal (b), and the motor to be driven being connected to the third terminal (c), and

a DC power supply voltage being applied to each of the terminals of sides of the first and second arms (2u-P, 2v-P, 2w-P, 2u-N, 2v-N, 2w-P) to which the three-terminal coupled reactor (12) is not connected, **characterized in that** the method comprises:

a current command value creation step (S101) of creating a current command value ($i_u^*$) by using an amplitude command value ($I_1^*$) and a frequency command value (f*) increased from 0 to a prescribed value over a predetermined period of time; and

a motor start control step (S102) of starting the motor by performing control so that a motor driving current output from the third terminal (c) can follow the current command value ($i_u^*$),

wherein a feedback control of a primary current ($i_u$, $i_v$, $i_w$) is carried out using an open loop control in which the amplitude command value ($I_1^*$) and the frequency command value (f*) of the primary current are given in the feedforward manner according to a load torque ($T_L$).

2. The speed sensorless motor starting method according to Claim 1,
wherein each of the semiconductor switches (SW1, SW2) includes:

a semiconductor switching element (S) for supplying a current in one direction when turned ON; and
a feedback diode (D) connected to the semiconductor switching element (S) in antiparallel.

3. A speed sensorless motor starting apparatus (100) comprising an inverter (1) for starting a motor,
the inverter (1) including:

first and second arms (2u-P, 2v-P, 2w-P, 2u-N, 2v-N, 2w-P) each including a chopper cell (11-1, 11-2, 11-3, 11-4, 11-5, 11-6, 11-7, 11-8) that includes two semiconductor switches (SW1, SW2) connected in series and a DC capacitor (C) connected to the two semiconductor switches (SW1, SW2) in parallel, each terminal of one of the two semiconductor switches (SW1, SW2) serving as an output terminal, the same numbers of chopper cells (11-1, 11-2, 11-3, 11-4, 11-5, 11-6, 11-7, 11-8) being cascade-connected in the first and second arms (2u-P, 2v-P, 2w-P, 2u-N, 2v-N, 2w-P) via the output terminals of the chopper cells (11-1, 11-2, 11-3, 11-4, 11-5, 11-6, 11-7, 11-8); and

a three-terminal coupled reactor (12) including a first terminal (a), a second terminal (b), and a third terminal (c) located on a winding wire between the first terminal (a) and the second terminal (b), the first arm being connected to the first terminal (a), the second arm being connected to the second terminal (b), and the motor to be driven being connected to the third terminal (c), and

a DC power supply voltage being applied to each of the terminals of sides of the first and second arms (2u-P, 2v-P, 2w-P, 2u-N, 2v-N, 2w-P) to which the three-terminal coupled reactor (12) is not connected, **characterized in that** the apparatus (100) comprises:

a current command value creation unit (31) configured to create a current command value ($i_u^*$) by using an amplitude command value ($I_1^*$) and a frequency command value (f*) increased from 0 to a prescribed value over a predetermined period of time; and

a motor start control unit (31) configured to start the motor by performing control so that a motor driving current output from the third terminal (c) can follow the current command value ($i_u^*$),

wherein a feedback control of a primary current ($i_u$, $i_v$, $i_w$) is carried out using an open loop control in which the amplitude command value ($I_1^*$) and the frequency command value (f*) of the primary current are given in the feedforward manner according to a load torque ($T_L$).

4. The speed sensorless motor starting apparatus (100) according to Claim 3,
wherein each of the semiconductor switches (SW1, SW2) includes:

a semiconductor switching element (S) for supplying a current in one direction when turned ON; and
a feedback diode (D) connected to the semiconductor switching element (S) in antiparallel.

**Patentansprüche**

1. Drehzahlsensorloses Motorstartverfahren, das einen Motor mit einem Wechselrichter (1) startet, wobei der Wechselrichter (1) enthält:

   einen ersten und einen zweiten Arm (2u-P, 2v-P, 2w-P, 2u-N, 2v-N, 2w-P), die jeweils eine Zerhackerzelle (11-1, 11-2, 11-3, 11-4, 11-5, 11-6, 11-7, 11-8) enthalten, die zwei in Reihe geschaltete Halbleiterschalter (SW1, SW2) und einen mit den beiden Halbleiterschaltern (SW1, SW2) parallel geschalteten Gleichspannungskondensator (C) enthalten, wobei jeder Anschluss von einem der beiden Halbleiterschalter (SW1, SW2) als ein Ausgangsanschluss dient, und wobei die gleiche Anzahl an Zerhackerzellen (11-1, 11-2, 11-3, 11-4, 11-5, 11-6, 11-7, 11-8) in dem ersten und dem zweiten Arm (2u-P, 2v-P, 2w-P, 2u-N, 2v-N, 2w-P) über die Ausgangsanschlüsse der Zerhackerzellen (11-1, 11-2, 11-3, 11-4, 11-5, 11-6, 11-7, 11-8) in Kaskade geschaltet ist; und
   eine mit drei Anschlüssen verbundene Drossel (12), die einen ersten Anschluss (a), einen zweiten Anschluss (b) und einen dritten Anschluss (c), der an einem Wicklungsdraht zwischen dem ersten Anschluss (a) und dem zweiten Anschluss (b) angeordnet ist, enthält, wobei der erste Arm mit dem ersten Anschluss (a) verbunden ist, der zweite Arm mit dem zweiten Anschluss (b) verbunden ist und der anzutreibende Motor mit dem dritten Anschluss (c) verbunden ist, und
   eine Gleichstromversorgungsspannung, die an jeden der Anschlüsse der Seiten des ersten und des zweiten Arms (2u-P, 2v-P, 2w-P, 2u-N, 2v-N, 2w-P) angelegt wird, an die die mit den drei Anschlüssen verbundene Drossel (12) nicht angeschlossen ist,
   **dadurch gekennzeichnet, dass** das Verfahren umfasst:

   einen Strombefehlswerterzeugungsschritt (S101) zum Erzeugen eines Strombefehlswerts ($i_u$*) unter Verwendung eines Amplitudenbefehlswerts ($I_1$*) und eines Frequenzbefehlswerts (f*), die über eine vorbestimmte Zeitspanne von 0 auf einen vorgeschriebenen Wert erhöht wurden; und
   einen Motorstartsteuerschritt (S102) zum Starten des Motors durch ein Ausführen einer Steuerung, so dass ein Motorantriebsstrom, der von dem dritten Anschluss (c) ausgegeben wird, dem Strombefehlswert ($i_u$*) folgen kann,
   wobei eine Rückkopplungssteuerung eines Primärstroms ($i_u$, $i_v$, $i_w$) unter Verwendung einer Steuerung mit einem offenen Regelkreis durchgeführt wird, in der der Amplitudenbefehlswert ($I_1$*) und der Frequenzbefehlswert (f*) des Primärstroms in einer Vorwärtskopplung entsprechend einem Lastmoment ($T_L$) gegeben werden.

2. Drehzahlsensorloses Motorstartverfahren nach Anspruch 1, wobei jeder der Halbleiterschalter (SW1, SW2) enthält:

   ein Halbleiterschaltelement (S) zum Zuführen eines Stroms in eine Richtung, wenn es eingeschaltet ist; und
   eine Rückkopplungsdiode (D), die antiparallel mit dem Halbleiterschaltelement (S) geschaltet ist.

3. Drehzahlsensorlose Motorstartvorrichtung (100), die einen Wechselrichter (1) zum Starten eines Motors aufweist, wobei der Wechselrichter (1) enthält:

   einen ersten und einen zweiten Arm (2u-P, 2v-P, 2w-P, 2u-N, 2v-N, 2w-P), die jeweils eine Zerhackerzelle (11-1, 11-2, 11-3, 11-4, 11-5, 11-6, 11-7, 11-8) enthalten, die zwei in Reihe geschaltete Halbleiterschalter (SW1, SW2) und einen mit den beiden Halbleiterschaltern (SW1, SW2) parallel geschalteten Gleichspannungskondensator (C) enthalten, wobei jeder Anschluss eines der beiden Halbleiterschalter (SW1, SW2) als ein Ausgangsanschluss dient, und wobei die gleiche Anzahl an Zerhackerzellen (11-1, 11-2, 11-3, 11-4, 11-5, 11-6, 11-7, 11-8) in dem ersten und dem zweiten Arm (2u-P, 2v-P, 2w-P, 2u-N, 2v-N, 2w-P) über die Ausgangsanschlüsse der Zerhackerzellen (11-1, 11-2, 11-3, 11-4, 11-5, 11-6, 11-7, 11-8) in Kaskade geschaltet ist; und
   eine mit drei Anschlüssen verbundene Drossel (12), die einen ersten Anschluss (a), einen zweiten Anschluss (b) und einen dritten Anschluss (c), der an einem Wicklungsdraht zwischen dem ersten Anschluss (a) und dem zweiten Anschluss (b) angeordnet ist, enthält, und wobei der erste Arm mit dem ersten Anschluss (a) verbunden ist, der zweite Arm mit dem zweiten Anschluss (b) verbunden ist und der anzutreibende Motor mit dem dritten Anschluss (c) verbunden ist, und
   eine Gleichstromversorgungsspannung, die an jeden der Anschlüsse der Seiten des ersten und des zweiten Arms (2u-P, 2v-P, 2w-P, 2u-N, 2v-N, 2w-P) angelegt wird, an die mit den drei Anschlüssen verbundene Drossel (12) nicht angeschlossen ist, **dadurch gekennzeichnet, dass** die Vorrichtung (100) aufweist:

eine Strombefehlswert-Erzeugungseinheit (31), die ausgestaltet ist, um einen Strombefehlswert ($i_u$*) unter Verwendung eines Amplitudenbefehlswerts ($I_1$*) und eines Frequenzbefehlswerts (f*) zu erzeugen, die über einen vorbestimmten Zeitraum von 0 auf einen vorgeschriebenen Wert erhöht wurden; und

eine Motorstart-Steuereinheit (31), die ausgestaltet ist, um den Motor durch ein Ausführen einer Steuerung zu starten, so dass ein Motorantriebsstrom, der von dem dritten Anschluss (c) ausgegeben wird, dem Strombefehlswert ($i_u$*) folgen kann,

wobei eine Rückkopplungsregelung eines Primärstroms ($i_u$, $i_v$, $i_w$) unter Verwendung einer Steuerung mit einem offenen Regelkreis durchgeführt wird, in der der Amplitudenbefehlswert ($I_1$*) und der Frequenzbefehlswert (f*) des Primärstroms in einer Vorwärtskopplung entsprechend einem Lastmoment ($T_L$) gegeben werden.

**4.** Drehzahlsensorlose Motorstartvorrichtung (100) nach Anspruch 3, wobei jeder der Halbleiterschalter (SW1, SW2) enthält:

ein Halbleiterschaltelement (S) zum Zuführen eines Stroms in eine Richtung, wenn es eingeschaltet ist; und eine Rückkopplungsdiode (D), die antiparallel mit dem Halbleiterschaltelement (S) geschaltet ist.

## Revendications

**1.** Procédé de démarrage de moteur sans capteur de vitesse qui démarre un moteur en utilisant un onduleur (1), l'onduleur (1) comportant :

des premier et second bras (2u-P, 2v-P, 2w-P, 2u-N, 2v-N, 2w-P) comportant chacun une cellule d'interruption périodique (11-1, 11-2, 11-3, 11-4, 11-5, 11-6, 11-7, 11-8) qui comporte deux commutateurs à semi-conducteur (SW1, SW2) connectés en série et un condensateur continu (C) connecté aux deux commutateurs à semi-conducteur (SW1, SW2) en parallèle, chaque borne de l'un des deux commutateurs à semi-conducteur (SW1, SW2) servant de borne de sortie, les mêmes nombres de cellules d'interruption périodique (11-1, 11-2, 11-3, 11-4, 11-5, 11-6, 11-7, 11-8) étant connectées en cascade dans les premier et second bras (2u-P, 2v-P, 2w-P, 2u-N, 2v-N, 2w-P) via les bornes de sortie des cellules d'interruption périodique (11-1, 11-2, 11-3, 11-4, 11-5, 11-6, 11-7, 11-8) ; et

un réacteur couplé à trois bornes (12) comportant une première borne (a), une deuxième borne (b), et une troisième borne (c) située sur un fil d'enroulement entre la première borne (a) et la deuxième borne (b), le premier bras étant connecté à la première borne (a), le second bras étant connecté à la deuxième borne (b), et le moteur à entraîner étant connecté à la troisième borne (c), et

une tension d'alimentation continue étant appliquée à chacune des bornes de côtés des premier et second bras (2u-P, 2v-P, 2w-P, 2u-N, 2v-N, 2w-P) auxquels le réacteur couplé à trois bornes (12) n'est pas connecté, **caractérisé en ce que** le procédé comprend :

une étape de création de valeur d'ordre de courant (S101) consistant à créer une valeur d'ordre de courant ($i_u$*) en utilisant une valeur d'ordre d'amplitude ($I_1$*) et une valeur d'ordre de fréquence (f*) augmentées de 0 à une valeur prescrite sur une période de temps prédéterminée ; et

une étape de commande de démarrage de moteur (S102) consistant à démarrer le moteur en réalisant une commande de sorte qu'un courant d'entraînement de moteur fourni en sortie depuis la troisième borne (c) puisse suivre la valeur d'ordre de courant ($i_u$*),

dans lequel une commande de rétroaction d'un courant primaire ($i_u$, $i_v$, $i_w$) est réalisée à l'aide d'une commande à boucle ouverte dans laquelle la valeur d'ordre d'amplitude ($I_1$*) et la valeur d'ordre de fréquence (f*) du courant primaire sont données de la manière prédictive selon un couple de charge ($T_L$).

**2.** Procédé de démarrage de moteur sans capteur de vitesse selon la revendication 1, dans lequel chacun des commutateurs à semi-conducteur (SW1, SW2) comporte :

un élément de commutation à semi-conducteur (S) pour fournir un courant dans une direction lorsqu'il est mis sous tension ; et

une diode de rétroaction (D) connectée à l'élément de commutation à semi-conducteur (S) en antiparallèle.

**3.** Appareil de démarrage de moteur sans capteur de vitesse (100) comprenant un onduleur (1) pour démarrer un moteur,

l'onduleur (1) comportant :

des premier et second bras (2u-P, 2v-P, 2w-P, 2u-N, 2v-N, 2w-P) comportant chacun une cellule d'interruption périodique (11-1, 11-2, 11-3, 11-4, 11-5, 11-6, 11-7, 11-8) qui comporte deux commutateurs à semi-conducteur (SW1, SW2) connectés en série et un condensateur continu (C) connecté aux deux commutateurs à semi-conducteur (SW1, SW2) en parallèle, chaque borne de l'un des deux commutateurs à semi-conducteur (SW1, SW2) servant de borne de sortie, les mêmes nombres de cellules d'interruption périodique (11-1, 11-2, 11-3, 11-4, 11-5, 11-6, 11-7, 11-8) étant connectées en cascade dans les premier et second bras (2u-P, 2v-P, 2w-P, 2u-N, 2v-N, 2w-P) via les bornes de sortie des cellules d'interruption périodique (11-1, 11-2, 11-3, 11-4, 11-5, 11-6, 11-7, 11-8) ; et

un réacteur couplé à trois bornes (12) comportant une première borne (a), une deuxième borne (b), et une troisième borne (c) située sur un fil d'enroulement entre la première borne (a) et la deuxième borne (b), le premier bras étant connecté à la première borne (a), le second bras étant connecté à la deuxième borne (b), et le moteur à entraîner étant connecté à la troisième borne (c), et

une tension d'alimentation continue étant appliquée à chacune des bornes de côtés des premier et second bras (2u-P, 2v-P, 2w-P, 2u-N, 2v-N, 2w-P) auxquels le réacteur couplé à trois bornes (12) n'est pas connecté, **caractérisé en ce que** l'appareil (100) comprend :

une unité de création de valeur d'ordre de courant (31) configurée pour créer une valeur d'ordre de courant ($i_u^*$) en utilisant une valeur d'ordre d'amplitude ($I_1^*$) et une valeur d'ordre de fréquence ($f^*$) augmentées de 0 à une valeur prescrite sur une période de temps prédéterminée ; et

une unité de commande de démarrage de moteur (31) configurée pour démarrer le moteur en réalisant une commande de sorte qu'un courant d'entraînement de moteur fourni en sortie depuis la troisième borne (c) puisse suivre la valeur d'ordre de courant ($i_u^*$),

dans lequel une commande de rétroaction d'un courant primaire ($i_u$, $i_v$, $i_w$) est réalisée à l'aide d'une commande à boucle ouverte dans laquelle la valeur d'ordre d'amplitude ($I_1^*$) et la valeur d'ordre de fréquence ($f^*$) du courant primaire sont données de la manière prédictive selon un couple de charge ($T_L$).

**4.** Appareil de démarrage de moteur sans capteur de vitesse (100) selon la revendication 3,

dans lequel chacun des commutateurs à semi-conducteur (SW1, SW2) comporte :

un élément de commutation à semi-conducteur (S) pour fournir un courant dans une direction lorsqu'il est mis sous tension ; et

une diode de rétroaction (D) connectée à l'élément de commutation à semi-conducteur (S) en antiparallèle.

# FIG. 1

100

AMPLITUDE
COMMAND VALUE
$I_1*$

FREQUENCY
COMMAND VALUE
$f*$

31

CURRENT
COMMAND VALUE
CREATION UNIT

CURRENT
COMMAND VALUE
$i_u*$

32

MOTOR START
CONTROL UNIT

PHASE VOLTAGE
COMMAND VALUE
$v_u*$

# FIG. 2

START

CREATE CURRENT
COMMAND VALUE — S101

CONTROL MOTOR START — S102

FIG. 3

FIG. 4

FIG. 5

# FIG. 6

$$I_{1i} < I_{1j} < I_{1k}$$
$$f_{si} > f_{sj} > f_{sk}$$

# FIG. 7

# FIG. 8

# FIG. 9

# FIG. 10

# FIG. 11

# FIG. 12

# FIG. 13

# FIG. 14

FIG. 15

FIG. 16

# FIG. 17

# FIG. 18

# FIG. 19

# FIG. 20

# FIG. 21

# FIG. 22

# FIG. 23

(A)

```
                    ┌─ 11-1
        ┌──────────┐
        │ CHOPPER  │──┤├─
        │  CELL    │
        └──────────┘
         ⋮      ⋮
        ┌──────────┐
        │ CHOPPER  │──┤├─
        │  CELL    │
        └──────────┘
              └─ 11-4
  12-1 ⌇
```

(B)

```
  12-1 ⌇
        ┌─ 11-1
        ┌──────────┐
        │ CHOPPER  │──┤├─
        │  CELL    │
        └──────────┘
         ⋮      ⋮
        ┌──────────┐
        │ CHOPPER  │──┤├─
        │  CELL    │
        └──────────┘
              └─ 11-4
```

(C)

```
        ┌──────────┐
        │ CHOPPER  │──┤├─
        │  CELL    │
        └──────────┘
              └─ 11-1
         ⋮
  12-1 ⌇     ┌─ 11-4
        ┌──────────┐
        │ CHOPPER  │──┤├─
        │  CELL    │
        └──────────┘
```

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2485384 A1

- JP 2011078213 A

### Non-patent literature cited in the description

- **YOSUKE KONDO ; HATTI NATCHPONG ; YASUHUMI AKAGI.** Induction Motor Variable Driving System by 5-Level Diode Clamp PWM Rectifier : Inverter. *Journal D of Institute of Electrical Engineers of Japan,* vol. 128 (3), 2008
- **MAKOTO HAGIWARA ; KAZUTOSHI NISHIMURA ; YASUHUMI AKAGI.** High-Pressure Motor Drive Using Modular Multilevel PWM Inverter, 1st Report : Experimental Verification by 400 V, 15 kW Mini-model. *Journal D of Institute of Electrical Engineers of Japan,* 2010, vol. 130 (4), 544-551
- **KAZUTOSHI NISHIMURA ; MAKOTO HAGIWARA ; YASUHUMI AKAGI.** Application to High-Pressure Motor Driving System Using Modular Multilevel PWM Inverter - Experimental Verification by 400 V, 15 kW Mini-model. *Semiconductor Power Conversion Study Group of Institute of Electrical Engineers of Japan, SPC,* 24 January 2009, vol. 09, 19-24

- **NAOTO NIIMURA ; YASUHUMI AKAGI.** Decoupling Control of Three-phase Modular Multilevel Cascade Converter (MMCC-DSCC). *Journal D of Institute of Electrical Engineers of Japan,* 2012, vol. 1 (11), 1055-1064
- **KAZUTOSHI NISHIMURA ; MAKOTO HAGIWARA ; YASUHUMI AKAGI.** High-Pressure Motor Drive Using Modular Multilevel PWM Inverter, 2nd Report : Starting Method and Starting Characteristics. *Journal D of Institute of Electrical Engineers of Japan,* 2010, vol. 130 (4), 552-559
- **MAKOTO HAGIWARA ; ISAMU HASEGAWA ; YASUHUMI AKAGI.** Low-Speed Operation of Motor Drive Using Modular Multilevel Cascade Inverter (MMCI-DSCC). *Journal D of Institute of Electrical Engineers of Japan,* 2012, vol. 1 (11), 1072-1079